(19) Europäisches Patentamt

European Patent Office

Office européen des brevets

(11) **EP 0 895 928 B1**

(12) **EUROPEAN PATENT SPECIFICATION**

(45) Date of publication and mention
of the grant of the patent:
**15.03.2006 Bulletin 2006/11**

(51) Int Cl.:
***B62M 11/16*** *(2006.01)*

(21) Application number: **98306272.0**

(22) Date of filing: **05.08.1998**

(54) **Hub transmission for a bicycle**

Antriebsnabe für Fahrrad

Moyeu d'entraînement pour bicyclette

(84) Designated Contracting States:
**DE FR GB IT**

(30) Priority: **08.08.1997 JP 21523697**
 **30.10.1997 JP 29917897**
 **27.05.1998 JP 14612898**

(43) Date of publication of application:
**10.02.1999 Bulletin 1999/06**

(73) Proprietor: **SHIMANO INC.**
 **Osaka (JP)**

(72) Inventor: **Tabe, Koshi**
 **Sakai-shi,**
 **Osaka (JP)**

(74) Representative: **Murnane, Graham John et al**
 **Murgitroyd & Company**
 **165-169 Scotland Street**
 **Glasgow G5 8PL (GB)**

(56) References cited:
 **DE-A- 1 750 897      DE-A- 1 911 548**
 **DE-A- 2 635 442      US-A- 3 603 178**

## EP 0 895 928 B1

**Description**

**Background of the Invention**

The present invention relates to a shifter hub, and more particularly to an internal bicycle shifter hub for changing the speed of rotation of an input unit at a selected gear ratio and transmitting the result to an output unit, and allowing this gear ratio to be switched by centrifugal force.

Japanese Patent Publication No. 49-20656 describes an internal bicycle shifter hub in which the gear ratio is automatically switched by centrifugal force without the need to perform shifting operations. This internal shifter hub comprises a hub axle, a driver capable of rotating about the hub axle, a hub shell, a planetary gear mechanism for changing the speed of rotation of the driver and transmitting the result to the hub shell, a clutch mechanism for transmitting the output of the planetary gear mechanism to the hub shell or stopping such a transmission, a clutch-switching mechanism for switching the clutch mechanism by centrifugal force, and a support sleeve disposed between the planetary gear mechanism and the hub shell. The planetary gear mechanism comprises an inner-tooth gear, a sun gear, a plurality of planetary gears for engaging the inner-tooth gear and the sun gear, and a carrier for supporting the plurality of planetary gears. The carrier is formed integrally with the driver, and the rotation of the driver is transmitted to the carrier.

The clutch mechanism has a ratchet pawl between the inner-tooth gear and the hub shell, links the two when the ratchet pawl interlocks with the hub shell, and disengages the two during uncoupling. The hub shell is driven in an upshift mode via the planetary gear mechanism when the clutch mechanism has linked the two components, and is driven while being directly linked to the driver when the two components are disengaged.

The clutch-switching mechanism switches the clutch mechanism between a linked state and a disengaged state through the intermediary of a centrifugal force created by rotation. The clutch-switching mechanism comprises a weight support mounted while allowed to rotate about the hub axle, a weight member swingably mounted on the weight support, and a control member rotating about the hub axle in response to the rocking of the weight member. The weight support is nonrotatably linked to the inner-tooth gear. The control member uses circular movement to switch the clutch pawl of the clutch mechanism between an interlocked position and an uncoupled position. An upright control pin for interlocking with the control member is provided in the vicinity of the centre about which the weight member is swung, and the control member is provided with a slit for interlocking with the control pin, and with a control hole for controlling the clutch pawl. The interlocking of the control pin and the slit converts the rocking movement of the weight member into the circular movement of the control member. The support sleeve is rotatably supported on the hub axle and is joined by a serrated joint with the carrier of the planetary gear mechanism. A one-way clutch is mounted between the support sleeve and the hub shell.

In such a conventional internal shifter hub, the clutch pawl of the clutch mechanism is kept by the control hole of the control member in a position in which the pawl is separated from the hub shell until a rotational speed precluding the outward swinging of the weight member is reached. Consequently, rotation transmitted from the sprocket to the driver is further transmitted from the carrier to the hub shell via the support sleeve and the one-way clutch, and the hub shell is driven in a direct-coupled mode. The control pin turns while sliding in relation to the slit, and causes the control member to rotate when a certain rotational speed is achieved and the weight member has swung outward. When this happens, the clutch pawl, controlled by the control hole, rises to the position in which it is interlocked with the hub shell. For this reason, the rotation that has been transmitted from the sprocket to the driver is upshifted and outputted from the carrier to the inner-tooth gear via the planetary gears, and is further transmitted to the hub shell via the clutch mechanism, driving the hub shell in an upshifted mode.

In an arrangement in which the clutch mechanism is switched and the speed is changed using centrifugal force, the extent of rocking is very small because the weight member has a limited housing space. However, the conventional arrangement described above is such that the control pin has a short revolution path in relation to the rocking of the weight member because the control pin is disposed in the vicinity of the centre of rocking of the weight support. The control member is therefore unable to rotate over significant distances, making it necessary that the clutch pawl be switched between a linked state and a disengaged state by a very small amount of circular movement.

Another drawback is that large centrifugal forces are difficult to obtain because of the limited housing space for the weight member. It is therefore necessary to increase the efficiency with which the rocking movement is converted to a circular movement in the clutch-switching mechanism. With the conventional arrangement described above, however, the efficiency with which the rocking movement is converted to a circular movement is low, the circular movement of the control member is impeded in relation to the rocking of the weight member, and smooth shifting is difficult to achieve because the control pin interlocked with the slit is caused to slide along the slit to convert the rocking movement of the weight member into the rotational movement of the control member.

An object of the present invention is to increase the circular movement of the control member in relation to the rocking of the weight member in an internal shifter hub in which shifting is performed by centrifugal force.

Another object of the present invention is to increase the efficiency with which the rocking of the weight member is converted to the circular movement of the control member, and to perform smooth shifting in an internal shifter hub in which shifting is performed by centrifugal force.

An internal bicycle shifter hub according to the preamble of claim 1 is already known from DE-A-26 35 442, DE-A-1 911 548, DE-A-3 603 178, DE-A-1 750 897, DE-A-1 945 972 and DE-A-1 902 021.

**Summary of the Invention**

The present invention is directed to an internal bicycle shifter hub in accordance with the claim 1, and comprises a hub axle, a driver, a slave, a power transmitting mechanism, a clutch mechanism, and a clutch-switching mechanism. The hub axle is an axle that can be fixed on a bicycle frame. The driver can rotate about the hub axle and can be linked to the input unit. The slave can rotate about the hub axle and can be linked to the output unit. The power transmitting mechanism is a mechanism disposed between the driver and the slave and designed to change the speed of rotation received from the driver and to transmit the result to the slave. The clutch mechanism is a mechanism for linking and disengaging the slave and the driver. The clutch-switching mechanism has a weight member that can be swung about a first of its ends from a first position on the inner circumference to a second position on the outer circumference under the action of a rotation-induced centrifugal force, a control member capable of moving in a circle about the hub axle between a linked position in which the clutch mechanism is in a linked state and a disengaged position in which the mechanism is in a disengaged state, and an interlocking mechanism for rotating the control member in response to the movement of a second end of the rocking weight member, wherein said interlocking mechanism comprises a first link pin attached to the weight member, a second link pin attached to the control member, and a link member attached between the first and second link pins for separating and linking said control member and the second end of said weight member over a prescribed distance.

In this internal shifter hub, the weight member in the first position swings into the second position about its first end when the mounting section of the weight member starts rotating and a prescribed centrifugal force acts on the weight member. The control member is disposed in a disengaged position or a linked position when the weight member is in the first position. The clutch mechanism assumes a disengaged state, the driver and the slave are disengaged, and the rotation of the driver is changed in speed and outputted to the slave by the power transmitting mechanism when the control member has reached the disengaged position. In addition, the clutch mechanism assumes a linked state, the driver and the slave are linked, and the rotation of the driver is outputted unchanged to the slave when the control member has reached the linked position. The interlocking mechanism causes the control member to rotate from the disengaged position to the linked position or from the linked position to the disengaged position in response to the movement of the second end of the weight member when the weight member swings from the first position to the second position. As a result, a switch from shifting by the power transmitting mechanism to direct coupling occurs when the control member has moved from the disengaged position to the linked position, and a switch from direct coupling to shifting by the power transmitting mechanism occurs when the control member has moved from the linked position to the disengaged position. In this case, the revolution path of the interlocking member can be increased in relation to the rocking of the weight member, and the circular movement of the braking member can be extended, because the control member moves in a circle in response to the movement performed by the other end of the weight member under the action of the interlocking mechanism. (The second end is located at a distance from the centre of rocking of the first end of the weight member.)

Alternatively, the clutch-switching mechanism comprises a weight member which is swingably mounted by one of its ends on the slave and which is swung from a first position on the inner circumference to a second position on the outer circumference under the action of a centrifugal force exerted by the rotation of the slave, a control member moving in a circle about the hub axle between a linked position in which the clutch mechanism is in a linked state and a disengaged position in which the mechanism is in a disengaged state, and an interlocking mechanism for rotating the control member in response to the movement of the other end of the rocking weight member.

In this internal shifter hub, the weight member in the first position swings into the second position about its first end when the slave starts rotating and a prescribed centrifugal force acts on the weight member. The interlocking mechanism causes the control member to rotate from the disengaged position to the linked position or from the linked position to the disengaged position in response to the movement of the second end of the weight member when the weight member swings from the first position to the second position. As a result, a switch from shifting by the power transmitting mechanism to direct coupling occurs when the control member has moved from the disengaged position to the linked position, and a switch from direct coupling to shifting by the power transmitting mechanism occurs when the control member has moved from the linked position to the disengaged position. In this case, the revolution path of the interlocking member can be increased in relation to the rocking of the weight member, and the circular movement of the braking member can be extended, because the control member moves in a circle in response to the movement performed by the other end of the weight member under the action of the interlocking mechanism. (The second end is located at a distance from the centre of rocking of the first end of the weight member.) In addition, the rider can shift gears in reaction to the bicycle speed because the weight member is caused to swing by the rotation of the slave.

Alternatively, the clutch-switching mechanism may comprise a weight member which is swingably mounted by its first end on the driver and which is swung from a first position on the inner circumference to a second position on the outer circumference under the action of a centrifugal force exerted by the rotation of the driver, a control member capable of moving in a circle about the hub axle between a linked position in which the clutch mechanism is in a linked state and a disengaged position in which the mechanism is in a disengaged state, and an interlocking mechanism for rotating the control member in response to the movement of the other end of the rocking weight member.

In this internal shifter hub, the weight member in the first position swings into the second position about its first end when the driver starts rotating and a prescribed centrifugal force acts on the weight member. The interlocking member causes the control member to rotate from the disengaged position to the linked position or from the linked position to the disengaged position in response to the movement of the second end of the weight member when the weight member swings from the first position to the second position. As a result, a switch from shifting by the power transmitting mechanism to direct coupling occurs when the control member has moved from the disengaged position to the linked position, and a switch from direct coupling to shifting by the power transmitting mechanism occurs when the control member has moved from the linked position to the disengaged position. In this case, the revolution path of the interlocking member can be increased in relation to the rocking of the weight member, and the circular movement of the braking member can be extended, because the control member moves in a circle in response to the movement performed by the other end of the weight member under the action of the interlocking mechanism. (The second end is located at a distance from the centre of rocking of the first end of the weight member.) In addition, the rider can rapidly shift gears at will because the weight member is caused to swing by the rotation of the driver.

Preferably, the interlocking mechanism separates and links the control member and the second end of the weight member over a prescribed distance. In this case, the link member of the interlocking mechanism revolves and the control member moves in a circle due to the rocking of the weight member, resulting in the two members being moved by rolling rather than sliding during the circular movement of the control member. As a result, the rocking of the weight member is converted to a circular movement of the control member with higher efficiency than in the case of sliding, allowing for a smooth shifting among speeds.

Preferably, the centrifugal switching mechanism is further provided with a first energizing member for pushing the control member toward a disengaged position or linked position. In this case, the weight member is held in the first position without being swung because the control member is pushed toward a disengaged position or a linked position even when the weight member tends to swing into the first position or second position under the action of gravity when no centrifugal force is applied. An additional feature is that even when a single control member is provided with a plurality of weight members, all the weight members can be held in the first position merely by energizing the control member without energizing the individual weight members.

Preferably, the slave is disposed at least partially around the inside of the driver and wherein the clutch mechanism comprises a linking pawl element that is mounted on the outer circumferential surface of the slave while allowed to swing between a linked state and a disengaged state, and that is switched between the linked state and disengaged state by the control member; a linking tooth element that is provided to the inner circumferential surface of the driver and that is capable of stopping the linking pawl element in the linked state; and a second energizing member for pushing the linking pawl element into the linked state. In this case, the linking pawl element assumes a disengaged state, and the rotation of the driver is not transmitted to the slave when the disengaged state is established by the control member. When the linked state is established, the linking pawl element is pushed toward the linked state by the first energizing member, and the tip of this element is stopped by the linking tooth element. The rotation of the driver is therefore directly transmitted to the slave. This arrangement makes it possible to obtain a clutch mechanism in which linked and disengaged states can be established by means of a simple structure involving the rocking of the linking pawl element.

Preferably, the driver is provided with a linking tooth element such that the linking pawl element in the linked state is not stopped when the driver rotates in the opposite direction from the travelling direction. In this case, a simple structure can be used to construct a clutch mechanism which is conferred with a free hub function for rotating the slave even when the rider stops pedalling during rotation and the driver is stopped.

Preferably, the power transmitting mechanism is a planetary gear mechanism comprising an inner-tooth gear linkable to the driver, a sun gear provided to the outer circumferential surface of the hub axle, a plurality of planetary gears that mesh with the inner-tooth gear and sun gear, and a frame body that is capable of rotating about the hub axle, that rotatably supports the planetary gears, and that can be linked to the slave. In this case, the rotation of the driver is transmitted from the inner-tooth gear to the planetary gear mechanism, reduced in speed, and outputted to the slave from the frame body. For this reason, the rotation of the driver is reduced in speed and transmitted to the slave via the planetary gear mechanism by initially bringing the clutch mechanism into a disengaged state. As a result, the rotation of the driver is reduced in speed and transmitted to the slave during startup, making it possible to lightly step on the pedals and to accelerate the start dash. Another feature is that rotation can be transmitted by the planetary gear mechanism highly efficiently without any reduction in transmission efficiency during a regular ride because direct linkage

# EP 0 895 928 B1

between the driver and the slave can be achieved by bringing the clutch mechanism into a linked state through the action of centrifugal force. In addition, gear ratios ranging from high gear ratios to low gear ratios can be freely obtained within a narrow space with the aid of the planetary gear mechanism.

Preferably, the inner-tooth gear is formed integrally with the inner circumferential surface of the driver, and the sun gear is formed integrally with the outer circumferential surface of the hub axle. In this case, assembly is facilitated in comparison with a case in which the inner-tooth gear and the sun gear are mounted separately.

Alternatively, the power transmitting mechanism may be a planetary gear mechanism comprising an inner-tooth gear linkable to the slave, a sun gear provided to the outer circumferential surface of the hub axle, a plurality of planetary gears that mesh with the inner-tooth gear and sun gear, and a frame body that is capable of rotating about the hub axle, that rotatably supports the planetary gears, and that can be linked to the driver. In this case, the rotation of the driver is transmitted from the frame body to the planetary gear mechanism, increased in speed, and outputted to the slave from the inner-tooth gear. For this reason, the rotation of the driver is transmitted directly to the slave during startup, and this rotation is transmitted with high efficiency because the clutch mechanism is initially brought into a linked state, and direct linkage is achieved between the driver and the slave. Another feature is that rotation can be increased in speed and transmitted from the driver to the slave by the planetary gear mechanism during a regular ride because the clutch mechanism can be brought into a directly linked state by being switching into a disengaged state through the intermediary of centrifugal force. In addition, gear ratios ranging from high gear ratios to low gear ratios can be freely obtained within a narrow space with the aid of the planetary gear mechanism.

Alternatively, the power transmitting mechanism may be a planetary gear mechanism comprising an inner-tooth gear formed on the inner circumferential surface of the second driving member, a sun gear provided to the outer circumferential surface of the hub axle such that meshing with the inner-tooth gear is achieved, a plurality of planetary gears that mesh with the inner-tooth gear and sun gear, and a frame body that is capable of rotating about the hub axle, that rotatably supports the planetary gears, and that can be linked to the slave. In this case, the desired downshifting ratio can be achieved with a compact structure.

Preferably, the planetary gears comprise a small-diameter first gear element for meshing with the inner-tooth gear, and a large-diameter second gear element that is disposed concentrically with, and in proximity to, the axial direction of the first gear element, and that is designed to mesh with the sun gear. In this case, a gear ratio corresponding to a cross ratio can be obtained with a comparatively small number of teeth on the inner-tooth gear.

Alternatively, the planetary gears may comprise a small-diameter first gear element for meshing with the sun gear, and a large-diameter second gear element that is disposed concentrically with, and in proximity to, the axial direction of the first gear element, and that is designed to mesh with the inner-tooth gear. In this case, a wide range of gear ratios can be obtained with a comparatively small number of teeth on the inner-tooth gear.

Preferably, the present invention further comprises a one-way clutch that is disposed between the planetary gear mechanism and the slave and that causes the slave to rotate in the travelling direction in response to the rotation of the planetary gear mechanism in the travelling direction. In this case, rotation in the travelling direction alone can be transmitted from the planetary gear mechanism to the slave, and no rotation is transmitted from the driver to the slave via the one-way clutch when the slave rotates in the travelling direction at a higher speed than does the driver

Preferably, the one-way clutch is disposed between the slave and the frame body of the planetary gear mechanism. In this case, rotation can be transmitted in a single direction irrespective of differences in the input to the inner-tooth gear or the frame body.

Preferably, the weight member is disposed on the outer circumference of the slave; the control member is disposed on the inner circumference of the slave; and the link member passes through the slave and links the weight member and the control member. In this case, the centrifugal force acting on the weight member increases at the same rotational speed, and better response is achieved during clutch switching because the weight member is disposed on the outer circumference of the slave.

Preferably, the driver comprises a first driving member linked to the input unit, and a second driving member that is aligned with the first driving member in the direction of the hub axle and that is nonrotatably linked to the first driving element; and wherein the slave is disposed on the outer circumference of the second driving member. In this case, the outside diameter of the hub can be reduced, and a compact hub obtained, by placing the clutch-switching mechanism on the outer circumference of the second driving member.

Preferably, the power transmitting mechanism is disposed between the hub axle and the inner circumference of the second driving member. In this case, the power transmitting mechanism can be located on the centre side of the hub because this mechanism is disposed between the hub axle and the inner circumference of the second driving member, which is located on the centre side. As a result, the hub axle is less likely to be subjected to the action of rapidly changing forces.

**Brief Description of the Drawings**

Figure 1 shows a side view of a bicycle according to a first embodiment of the present invention.

Figure 2 shows a longitudinal section of the first embodiment of the present invention.

Figure 3 shows a fragmentary cross section of the first embodiment of the present invention.

Figure 4 shows a schematic diagram of a planetary gear mechanism.

Figure 5 shows a fragmentary, exploded perspective view of the first embodiment of the present invention.

Figure 6 shows cross section VI-VI of Figure 3 with the clutch in a disengaged state.

Figure 7 shows a frontal view of a control plate, with the clutch in a disengaged state.

Figure 8 shows cross section VI-VI of Figure 3 with the clutch in a linked state.

Figure 9 shows a frontal view of the control plate, with the clutch in a linked state.

Figure 10 shows a longitudinal section of a second embodiment of the present invention.

Figures 11(a) and (b) show cross section VI-VI of the second embodiment of the present invention with the clutch in disengaged and linked states respectively.

Figure 12 shows a longitudinal section of a third embodiment of the present invention.

Figure 13 shows an exploded oblique view of the clutch-switching mechanism in accordance with the third embodiment of the present invention.

Figures 14 (a) and (b) show cross section VI-VI of the third embodiment of the present invention with the clutch in disengaged and linked states respectively.

Figure 15 shows a front view of the control plate in accordance with the third embodiment of the present invention.

Figure 16 shows cross section XVI-XVI of Figure 15.

Figure 17 shows a longitudinal section of a fourth embodiment of the present invention.

Figures 18 and 19 shows a fragmentary, exploded oblique view of the clutch-switching mechanism in accordance with the fourth embodiment of the present invention.

Figures 20(a) and (b) show cross section VI-VI of the fourth of the present invention with the clutch in disengaged and linked states respectively.

Figures 21(a) and (b) shows cross-sectional, enlarged views of the area near the clutch pawl in Figure 20(a) and (b) respectively.

**Detailed Description of the Embodiments**

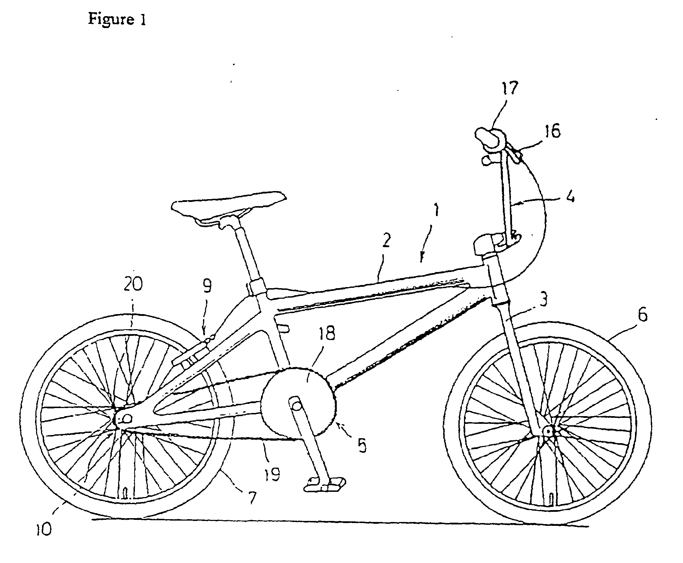

Figure 1 shows a BMX bicycle that comprises a frame 1 composed of a diamond-shaped frame body 2, a front fork 3, a handle component 4, a driver unit 5, a front wheel 6, a rear wheel 7 provided with a two-speed internal shifter hub 10, and a cantilever-shaped sidepull rear brake device 9 for braking the rear wheel 7.
Components such as a saddle 11, the handle component 4, the front wheel 6, and the rear wheel 7 are mounted on the frame 1.
The handle component 4 has a handle stem 14 that is fixed to the top of the front fork 3, and a handlebar 15 that is fixed to the handle stem 14. A brake lever 16 and a grip 17, which constitute the rear brake device 9, are mounted on the right end of the handlebar 15.

The driver unit 5 comprises a chainwheel 18 mounted in the lower portion of the frame body 2, a chain 19 wound around the chainwheel 18, and an internal shifter hub 10 equipped with a sprocket 20.

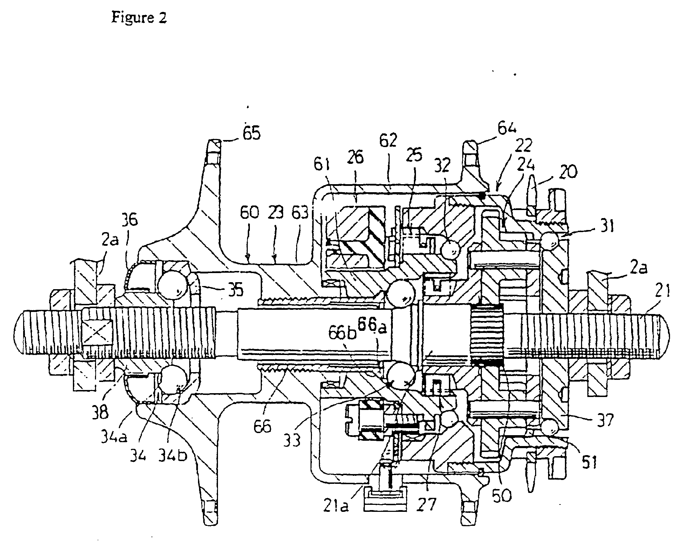

The internal shifter hub 10 is a two-step hub that includes downshifted and direct-coupled power transmission paths. This internal shifter hub 10 is mounted between a couple of rear fork ends 2a of the bicycle frame body 2, as shown in Figure 2. The internal shifter hub 10 comprises a hub axle 21 fixed in the rear fork ends 2a, a driver 22 mounted around the outside on one end of the hub axle 21 while allowed to move in a circle about the hub axle, a slave 23 that is disposed farther outward around the outside of the hub axle 21 and the driver 22 and that is linked to the rear wheel 7, a planetary gear mechanism 24 disposed around the inside of the driver 22, a clutch mechanism 25 for linking and disengaging the driver 22 and the slave 23, a clutch-switching mechanism 26 for switching the clutch mechanism 25, and a one-way clutch 27 for transmitting rotation in the travelling direction alone from the planetary gear mechanism 24 to the slave 23. The right end of the driver 22 (Figure 2) is rotatably supported by a bearing component 31 on the hub axle 21, and the left end is rotatably supported by a bearing component 32 in the slave 23. The two ends of the slave 23 are rotatably supported by bearing components 33 and 34 on the hub axle 21.

The hub axle 21 is a member that is fixed to the rear fork ends 2a of the bicycle frame body 2. Threaded portions for fixing or otherwise securing the axle in the rear fork ends 2a are formed on both ends of the hub axle 21. A large-diameter portion 21a is formed on the hub axle 21 somewhat to the right (in Figure 2) of the central section, and the sun gear 50 of the planetary gear mechanism 24 is formed on the right side of the large-diameter portion 21a. Hub cone members 37 and 38 having arm-shaped hub cone surfaces 31a and 34a for the bearing components 31 and 34, respectively, are screwed onto the mounting portions of the hub axle 21 that lie inward in relation to the rear fork ends 2a.

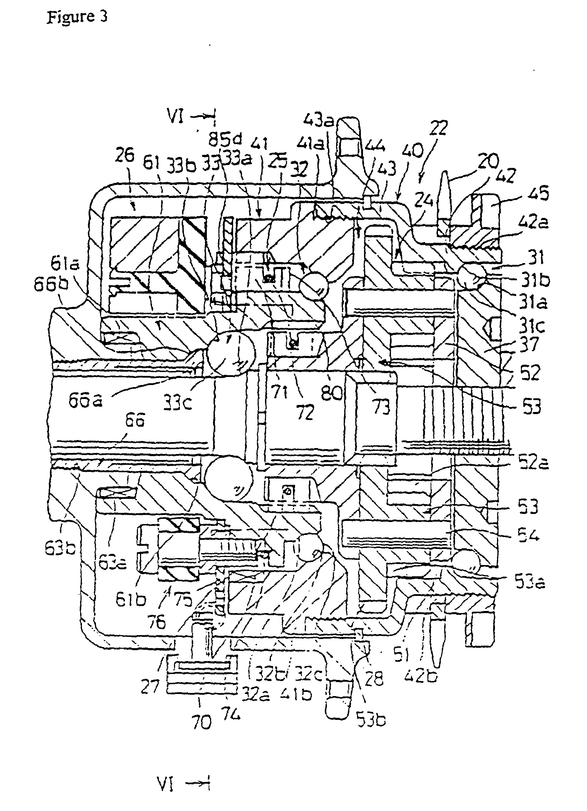

The driver 22 is a member for transmitting the rotation of the sprocket 20. As shown in Figure 3, the driver 22 comprises a first cylindrical component 40 (the right end of this component is rotatably supported by the bearing component 31), and a second cylindrical component 41 that is nonrotatably linked to the first cylindrical component 40 (the left end of the second cylindrical component is rotatably supported by the bearing component 32).

The first cylindrical component 40 comprises a small-diameter portion 42 on the right side of Figure 3, and a large-diameter portion 43 that is flared on the left side of the small-diameter portion 42. A housing space 44 for accommodating the planetary gear mechanism 24 is formed inside the first cylindrical component 40. The outer circumferential surface at the end of the small-diameter portion 42 is provided with an external thread 42a, and a lock nut 45 for fixing the sprocket 20 is screwed thereon. A sprocket attachment section 42b composed of outer serrations is formed on the outer circumferential surface of the small-diameter portion 42 in proximity to the external thread 42a, with the sprocket 20 nonrotatably attached. The inner-tooth gear 51 of the planetary gear mechanism 24 is formed on the inner circumferential surface of the small-diameter portion 42 on the side that faces the large-diameter portion 43. An arm-shaped ball race surface 31b for the bearing component 31 is formed on the inner circumferential surface at the end of the small-diameter portion 42. The bearing component 31 comprises the ball race surface 31b, the hub cone surface 31a, and a plurality of balls 31c interposed between the ball race surface 31b and the hub cone surface 31a.

An internal thread 43a, which is formed on the inner circumferential surface at the end of the large-diameter portion 43, is screwed onto an external thread 41a formed on the end face of the second cylindrical component 41, nonrotatably linking the second cylindrical component 41. A seal ring 23 for sealing the gap formed by the slave 23 is fitted over the outer circumferential surface of the large-diameter portion 43.

The second cylindrical component 41 is a member whose diameter is smaller than that of the first cylindrical component 40 in threaded engagement with the inner circumferential surface of the first cylindrical component. The external thread 41a to be threadably connected with the internal thread 43a is formed on the outer circumferential surface of the end section. A stop 41b that rests against the tip of the large-diameter portion 43 of the first cylindrical component 40 in proximity to the external thread 41a is formed on the outer circumferential surface of the second cylindrical component 41. The outside diameter of the stop 41b is essentially the same size as the outside diameter of the large-diameter portion 43 of the first cylindrical component 40. The bearing component 32 and the clutch mechanism 25 are disposed around the inside of the second cylindrical component 41. For this reason, the ball race surface 32b of the bearing component 32 and the ratchet teeth 70 of the clutch mechanism 25 are formed on the inner circumferential surface of the second cylindrical component 41. The bearing component 32 comprises the ball race surface 32b, a hub cone surface 32a formed on the outer circumferential surface at the end of a power transmitting body 61 (see below) for the slave 23, and a plurality of balls 32c interposed between the ball race surface 32b and the hub cone surface 32a.

Forming the driver 22 in such a manner into a two-part structure composed of the first cylindrical component 40 and second cylindrical component 41 makes it possible to mount the planetary gear mechanism 24 alongside the hub axle 21 without increasing the outside diameter of the section composed of the second cylindrical component 41 in comparison with the outside diameter of the section composed of the first cylindrical component 40 even when a bearing component 32 is provided. The outside diameter of the entire hub can therefore be reduced.

As shown in Figure 2, the slave 23 is a cylindrical member driven by the driver 22 and designed for rotating the rear wheel 7. The slave 23 has a hub shell 60 partially disposed around the outside of the driver 22, and a power transmitting body 61 that is fastened to the hub shell 60 by a fixing bolt 66 and that is disposed around the inside of the driver 22. This power transmitting body 61, in addition to functioning as a body for transmitting power from the driver 22 or the planetary gear mechanism 24 to the hub shell 60, also functions as a weight support for the clutch-switching mechanism 26 described below.

The hub shell 60, which may be a cylindrical member made of aluminum, has a large-diameter mechanism housing 62 for accommodating the driver 22, the clutch-switching mechanism 26, and the like, and a small-diameter, narrow cylindrical component 63 formed integrally with the mechanism housing 62. Hub flanges 64 and 65 for securing the spokes (not shown) of the rear wheel 7 are integrally formed on the outer circumferential surfaces of the mechanism housing 62 and narrow cylindrical component 63. As shown in Figure 3, the right end of the narrow cylindrical component 63 is provided with outer serrations 63a for nonrotatably securing the power transmitting body 61, and the inner circumferential surface is provided with an internal thread 63b for the threaded engagement of the fixing bolt 66. A space for accommodating the bearing component 34 is formed in the left end (Figure 2) of the narrow cylindrical component 63, and a ball race member 35 provided with a ball race surface 34b (which is an element of the bearing component 34) is secured in this space. The bearing component 34 comprises the hub cone surface 34a, the ball race surface 34b, and a plurality of balls 34c interposed between the ball race surface 34b and the hub cone surface 34a. A dust cap 36 is fitted over the bearing component 34.

The power transmitting body 61 may be a stepped cylindrical member made of chromium-molybdenum steel. As shown in Figure 3, inner serrations 61a for meshing with the outer serrations 63a of the narrow cylindrical component 63 are formed on the inner circumferential surface of the left end. The hub cone surface 32a for the bearing component 32 is formed on the outer circumferential surface at the right end of the power transmitting body 61, and ratchet teeth 80 constituting part of the one-way clutch 27 are formed on the inner circumferential surface of the right end. In addition, a ball race surface 33b for the bearing component 33 is formed on the inner circumferential surface in proximity to the ratchet teeth 80. The bearing component 33 comprises the ball race surface 33b, a hub cone surface 33a formed in the shape of an arm on the left end of the large-diameter portion 21a of the hub axle 21, and a plurality of balls 33c interposed between the hub cone surface 33a and the ball race surface 33b. A tapered section 61b is formed on the inner circumferential surface of the power transmitting body 61 in proximity to the component constituting the ball race surface 33b.

As shown in Figure 2, the fixing bolt 66 is a hollow cylindrical bolt, and the hub shell 60 and the power transmitting body 61 are firmly fastened in a concentric fashion. The head 66a of the fixing bolt 66 is provided with a tapered surface 66b for interlocking with the tapered section 61b, allowing the power transmitting body 61 and the hub shell 60 to be aligned and fastened.

As shown in Figure 3, the planetary gear mechanism 24 comprises the sun gear 50 formed on the hub axle 21, the inner-tooth gear 51 formed on the small-diameter portion 42 of the first cylindrical component 40 of the driver 22, a carrier 52 rotatably mounted on the large-diameter portion 21a of the hub axle 21, and three planetary gears 53 rotatably supported on the carrier 52. The carrier 52 is a member shaped as a collar flange with the hub axle 21 passing through it; and three gear housings 52a spaced at regular intervals in the circumferential direction are formed on the outer circumferential surface of this member. Three gear axles 54 for rotatably supporting the planetary gears 53 are fixed to the carrier 52. The planetary gears 53 have a small-diameter first gear element 53a for meshing with the inner-tooth gear 51, and a large-diameter second gear element 53b for meshing with the sun gear 50. The first gear element 53a and the second gear element 53b are formed adjacent to each other in the axial direction. The planetary gears 53 are thus composed of two gear elements 53a and 53b, making it possible to obtain a gear ratio corresponding to a cross ratio with a smaller number of teeth on the inner-tooth gear than in the case of a single gear element.

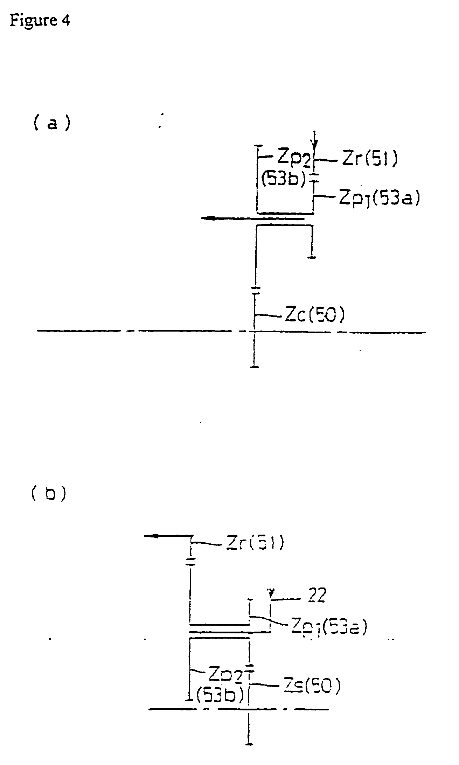

Here, as shown in Figure 4a, the gear ratio GR can be expressed by the following equation for a downshift in the inner-tooth gear input and carrier output:

$$GR = 1/(1 + (Zs/Zr) \times (Zp2/Zp1)),$$

where Zs is the number of teeth on the sun gear 50, Zr is the number of teeth on the inner-tooth gear 51, Zp1 is the number of teeth on the first gear element 53a of a planetary gear 53, and Zp2 is the number of teeth on the second gear element 53b.

Here, the following result may be obtained if the number of teeth Zs on the sun gear is set to 15, the number of teeth Zr on the inner-tooth gear to 57, the number of teeth Zp1 on the first gear element to 28, and the number of teeth Zp2 on the second gear element to 13:

$$GR = 1/(1 + (15/57) \times (13/28)) = 0.891$$

Consequently, the gear ratio GR is 0.891, and a single turn of the driver 22 is transmitted to the slave 23 after being reduced in speed to 0.891 revolutions.

The gear ratio of the planetary gear mechanism 24 should fall within a range of 0.8-0.95. In this case, the start dash can be accelerated, and the outside diameter of the internal shifter hub 10 reduced even when downshifting is performed at a cross ratio.

The gear ratio GR can be expressed by the following equation when downshifting is performed with the aid of planetary gears consisting of a single gear element.

$$GR = 1/(1 + (Zs /Zr))$$

In this case, the gear ratio GR is determined solely by the number of teeth Zr on the inner-tooth gear and the number of teeth Zs on the outer-tooth gear. Let us solve the equation 0.891 = 1/(1 + (15/Zr)) in an attempt to obtain a gear ratio of 0.891 with the aforementioned cross ratio by assuming that the number of teeth Zs on the sun gear is 15. As a result, the number of teeth Zr on the inner-tooth gear is 123, and the outside diameter of the driver 22 is increased at least twofold in comparison with a case in which the gear has two gear elements.

As shown in Figures 3, 5, and 6, the clutch mechanism 25 has ratchet teeth 70 (which are formed on the inner circumferential surface of the second cylindrical component 41 of the driver 22), two clutch pawls 71 capable of meshing with the ratchet teeth 70, and a spring member 72 for energizing the clutch pawls 71. The ratchet teeth 70 are formed as sawteeth on the inner circumferential surface of the second cylindrical component 41. The clutch pawls 71 are mounted on the outer circumferential surface of the power transmitting body 61 while allowed to alternate between a linked state in which they mesh with the ratchet teeth 70, and a disengaged state in which they are separated from the ratchet teeth 70. Pawl housings 73 for accommodating the clutch pawls 71 are provided at two positions on the outer circumferential surface of the power transmitting body 61. The spring member 72, which is positioned in a wound state in a groove 74 formed in the outer circumferential surface of the power transmitting body 61, pushes the clutch pawls 71 into a linked state. It is only when the clutch pawls 71 are in a linked state and the driver 22 rotates in the travelling direction that the rotation of the clutch mechanism 25 is transmitted to the power transmitting body 61 of the slave 23.

The clutch-switching mechanism 26 comprises a control plate 75 for switching the clutch pawls 71 between a linked state and a disengaged state, a moving mechanism 76 for moving the control place 75 in a reciprocating fashion about the hub axle, and a weight support doubling as the power transmitting body 61.

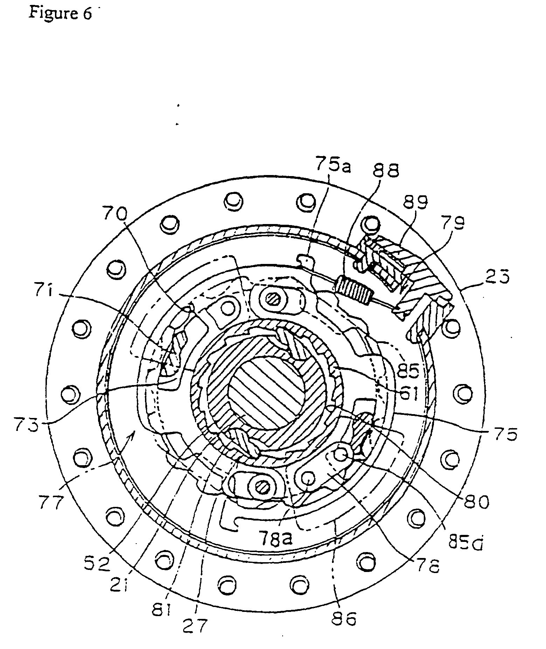

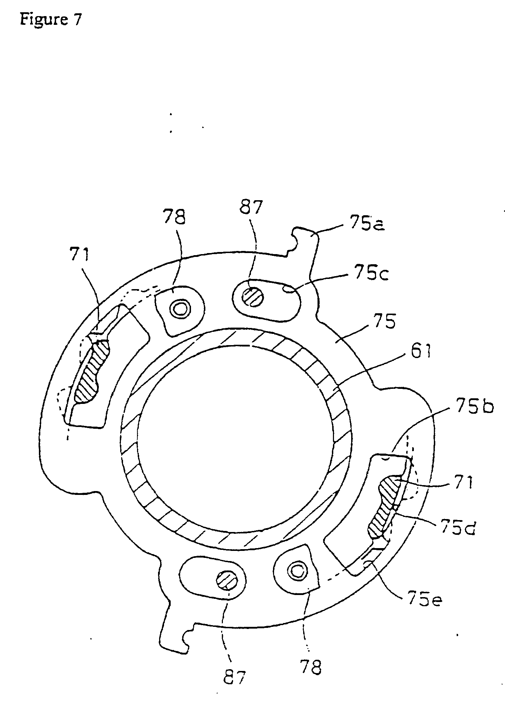

As shown in Figure 7, the control plate 75 is a flat member shaped as a modified ring and rotatably supported in its central portion by the power transmitting body 61. A hook 75a extending radially outward is formed on the outer edge of the control plate 75. In addition, two control windows 75b for controlling the clutch pawls 71 are formed between the inner and outer circumferences. The clutch pawls 71 are disposed such that they extend from the control windows 75b in the direction of the moving mechanism 76. The control windows 75b are provided with disengaging frames 75d for holding the clutch pawls 71 in a disengaged state, and with linking frames 75e for switching the pawls to a linked state. The clutch pawls 71 energized by the spring member 72 can be raised into a linked state by shaping the linking frames 75e such that they extend radially outward from the disengaging frames 75d. The hook 75a, the control windows 75b, and all the other components are set apart 180 degrees from each other (depending on the number of elements) to achieve balanced rotation. In addition, two through holes 75c accommodating the rocking axles 87 of weight retainers 85 (see below) are formed between the inner and outer circumferences. The control plate 75 is normally held in a disengaged position (shown in Figures 6 and 7) by the spring mechanism 79 described below. At this time, the tips of the clutch pawls 71 are stopped by the disengaging frames 75d of the control windows 75b, and the pawls are held in a disengaged state.

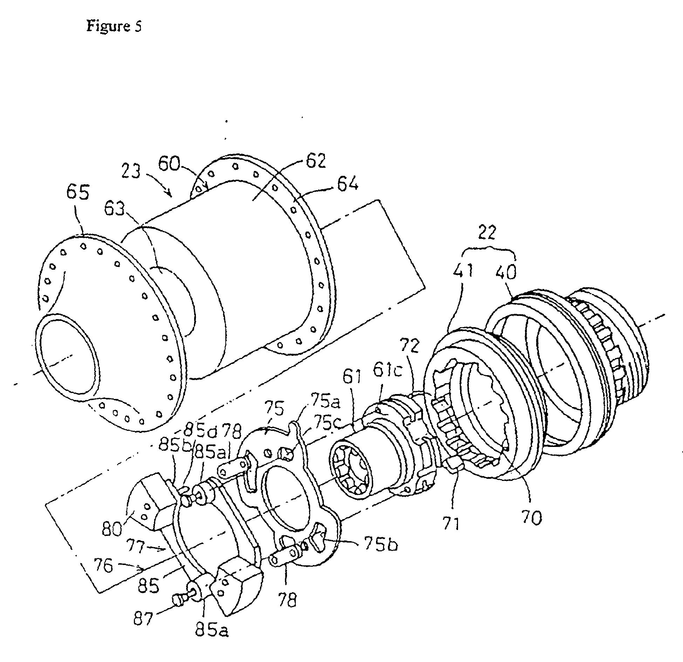

As shown in Figure 5, the moving mechanism 76, which is disposed on the left side of the control plate 75, comprises two rocking weight members 77, links 78 for linking the two respective weight members 77 and the control plate 75, and a spring mechanism 79 for energizing the control plate 75 clockwise in Figure 6.

The weight members 77 comprise two weight retainers 85 swingably mounted on the end face 61c of the power transmitting body 61, and weights 86 mounted on the tips of the weight retainers 85. The two weight retainers 85 may be made of a polyacetal resin. The weight retainers 85 are shaped such that they form a curve around the power transmitting body 61, and are positioned in the same way 180 degrees apart from each other around the power transmitting body 61. Bosses 85a are formed integrally with the bases of the weight retainers 85, and weight mounting components 85b composed of two protruding pins are formed integrally with the tips of the weight retainers. The rocking axles 87 pass through the bosses 85a. The rocking axles 87 also pass via the through holes 75c, and the tips of these axles are fixed to the power transmitting body 61. In addition, link pins 85d are formed integrally with the tips of the weight retainers 85 on the sides opposite from the weight mounting components 85b. The link pins 85d are used for the rotatable mounting of the links 78. The weights 86, which may be fan-shaped members made of lead or steel, are fixed by the two pins of the weight mounting components 85b.

The links 78 are members for rotating the braking member 75 in response to the movement of the tips of the weight members 77, which swing about their bases. The control plate 75 and the tips of the weight retainers 85 are linked at both ends thereof. The links 78 are flat members made of metal. One end of each link is provided with a round hole for inserting the link pins 85d, and the other end is provided with a round hole for inserting a link pin 78a, which is used to achieve linkage with the braking plate 75.

As shown in Figure 6, the spring mechanism 79 has a coil spring 88, one end of which is secured to the hook 75a, and a spring force adjustment mechanism 89 for adjusting the spring force of the coil spring 88. Shift timing can be adjusted by adjusting the spring force of the coil spring 88. The shift timing can also be varied by replacing the weights 86.

As shown in Figure 6, the one-way clutch 27, which may be a pawl type, comprises ratchet teeth 80 formed on the inner circumferential surface of the power transmitting body 61, clutch pawls 81 mounted on the outer circumferential surface of the carrier 52 of the planetary gear mechanism 24 while allowed to alternate between a linked state and a disengaged state, and a spring member (not shown) for energizing the clutch pawls 81 into a linked state. In the one-way clutch 27, the clutch pawls 81 are normally raised into a linked state, and the rotation of the carrier 52 is transmitted to the power transmitting body 61 when this carrier rotates in the travelling direction. No rotation is transmitted when the power transmitting body 61 rotates in the travelling direction at a higher speed than does the carrier 52.

The internal shifter hub 10 has the following paths because of the presence of such a planetary gear mechanism 24, clutch mechanism 25, clutch-switching mechanism 26, and one-way clutch 27:

a downshifted power transmission path composed of the driver 22, inner-tooth gear 51, planetary gear mechanism 24, carrier 52, and slave 23; and
a direct-coupled power transmission path composed of the driver 22, clutch mechanism 25, and slave 23.

When the rider steps on the pedals during startup, propelling the bicycle, the resulting rotation is transmitted to the driver 22 via the sprocket 20. At this time, the control plate 75 is in a disengaged position, and the clutch pawls 71 are held in a disengaged state by the control plate 75.
Consequently, there is no linkage between the driver 22 and the power transmitting body 61, and the rotation of the driver 22 is transmitted to the power transmitting body 61 along the downshifted power transmission path. As a result, the rotation of the sprocket 20 during startup is transmitted to the hub shell 60 after being reduced in speed to 0.891, for example. It is therefore possible to lightly step on the pedals during startup, achieving a start dash.

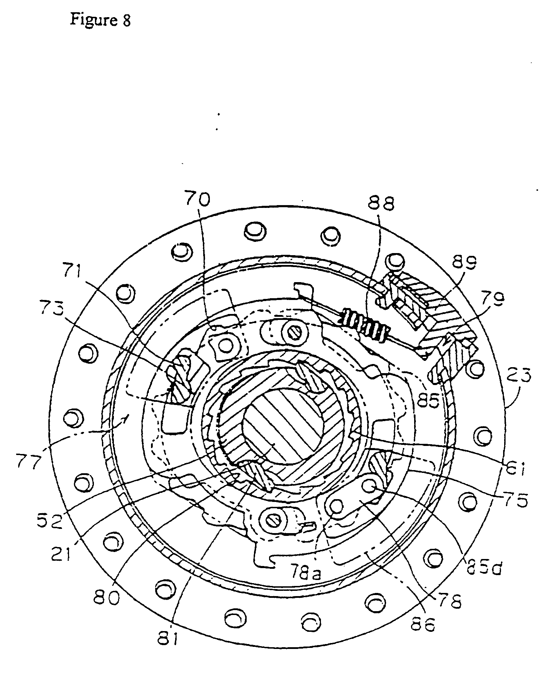

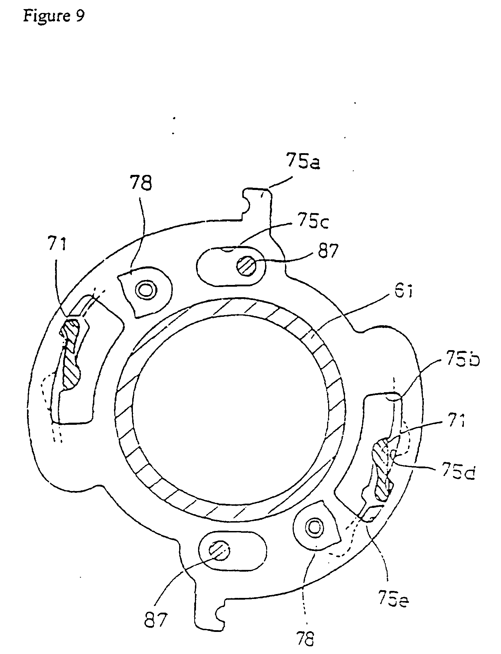

As shown in Figures 8 and 9, the weight members 77 swing outward against the action of the energizing force exerted by the coil spring 88 of the control plate 75 when the power transmitting body 61 achieves a rotational speed above a certain level. This level is determined by the adjustment of the spring mechanism 79, the mass of the weights, or the like. When the weight members 77 move in this manner, the control plate 75 is rotated counterclockwise in Figure 8 through the intermediary of the links 73 until it reaches a linked position. When the control plate 75 has reached the linked position, the linking frames 75e of the control windows 75b position themselves at the tips of the clutch pawls 71, and the clutch pawls 71 are raised into a linked state by the energizing force of the spring member 72. As a result, the rotation of the driver 22 in the travelling direction is transmitted directly to the power transmitting body 61 along the direct-coupled power transmission path, and the rotation of the sprocket 20 is transmitted unchanged to the rear wheel 7. Consequently, an upshift is performed once the rotational speed has exceeded a certain level. There is no reduction in the transmission efficiency of the planetary gear mechanism 24 during this regular ride because the driver 22 and the slave 23 are coupled directly.

When the rotational speed of the power transmitting body 61 drops below a prescribed level during cornering or the like, the weight members 77 are returned to their initial disengaged state by the coil spring 88, and the rotation of the driver 22 is transmitted to the slave 23 along the downshifted power transmission path. Because in this case the weight members 77 are mounted on the power transmitting body 61 constituting part of the slave 23, the gears are always changed toward higher speeds (toward the direct-coupled position) once the rear wheel 7 exceeds a certain rotational speed. This occurs even then the driver 22 does not rotate, that is, when the rider is not pedalling. Shifting that reacts to the bicycle speed can therefore be achieved on a constant basis. Consequently, swift shifting and quick acceleration can be achieved during startup, cornering, and in other cases requiring a transition from a lower speed to a higher speed when the goal is to maintain high speeds for extended periods of time, as in a bicycle race.

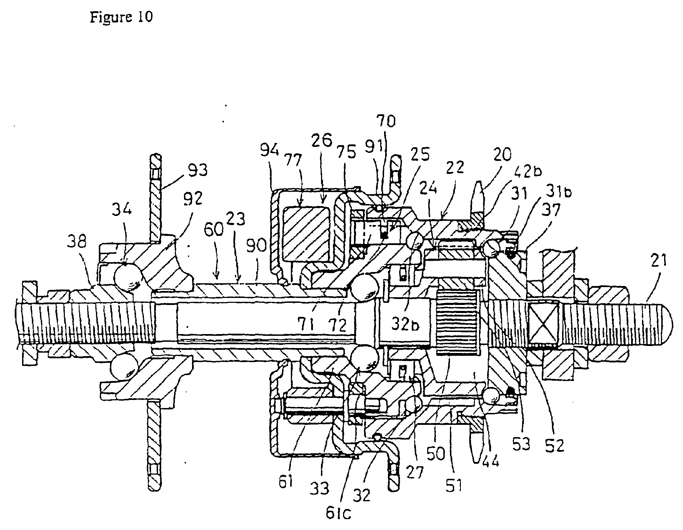

Although the first embodiment described above referred to an example in which a planetary gear mechanism having planetary gears that consisted of two gear elements was used to achieve a gear ratio corresponding to a cross ratio, it is also possible to use planetary gears composed of a single gear element when the cross ratio is not needed, as in the case of a street bike, for example. Figure 10 depicts a second embodiment of the present invention, which corresponds to such a case. In the description that follows, the same symbols are used to denote identical or similar members, and only the significant differences between the structures are described.

As in the first embodiment, the internal shifter hub 10 in Figure 10 comprises a hub axle 21, a driver 22, a slave 23, a planetary gear mechanism 24, a clutch mechanism 25, a clutch-switching mechanism 26, and a one-way clutch 27.

The driver 22 has a one-piece structure that is different from that described with reference to the above embodiment. A housing space 44 for accommodating the planetary gear mechanism 24 is formed inside the driver 22. A sprocket attachment section 42b consisting of an external thread is formed on the outer circumferential surface at the end of the driver 22. The inner-tooth gear 51 of the planetary gear mechanism 24 is formed on the inner circumferential surface of the driver 22. In addition, arm-shaped ball race surfaces 31b and 32b for the bearing components 31 and 32, respectively, are formed such that the inner-tooth gear 51 is sandwiched between chem. In all other respects, the structure of the bearing components 31 and 33 is the same as in the embodiment described above. Ratchet teeth 70 that are shaped as sawteeth and that constitute the clutch mechanism 25 are formed on the inner circumferential surface of the left end of the driver 22 in the circumferential direction (for example, at four equidistant positions).

The slave 23 has a hub shell 60 and a power transmitting body 61 that is riveted to the hub shell 60. The hub shell 60 has a cylindrical component 90, a right hub flange 91 riveted to the right end (in Figure 10) of the cylindrical component 90, a flange boss 92 riveted to the left end of the cylindrical component 90, and a left hub flange 93 riveted to the outer circumferential surface of the flange boss 92. All these components may be made from a rolled steel designed for common structural applications. In addition, a synthetic resin cover 94 for accommodating the weight members 77 of the clutch-switching mechanism 26 is provided closer to the centre away from the right-hand flange fixing component of the cylindrical component 90.

The right-hand hub flange 91 is press-moulded into a stepped bowl that accommodates the control plate 75 for the clutch mechanism 25 and the clutch-switching mechanism 26.

Except for the structure of the planetary gears 53, the planetary gear mechanism 24 is identical to the one described with reference to the above embodiment. The planetary gears 53 consist of a single gear element. If it is assumed in this case that the number of teeth Zs on the sun gear 50 is 18, the number of teeth Zr on the inner-tooth gear 51 is 48, and the number of tips Zp of the planetary gears 53 is 14, then the gear ratio GR will be

$$GR = 1/(1 + (Zs/Zr)) = 1/(1 + (18/48)) = 0.727,$$

irrespective of the number of teeth on the planetary gears 53.

The clutch mechanism 25 comprises ratchet teeth 70, clutch pawls 71 that mesh with the ratchet teeth 70, and a spring member 72 for energizing the clutch pawls 71. The clutch pawls 71 are mounted on the outer circumferential surface of the power transmitting body 61 while allowed to alternate between a linked state in which they mesh with the ratchet teeth 70, and a disengaged state in which they are separated from the ratchet teeth 70. As in the embodiment described above, the clutch pawls 71 are stopped by the control plate 75 of the clutch-switching mechanism 26.

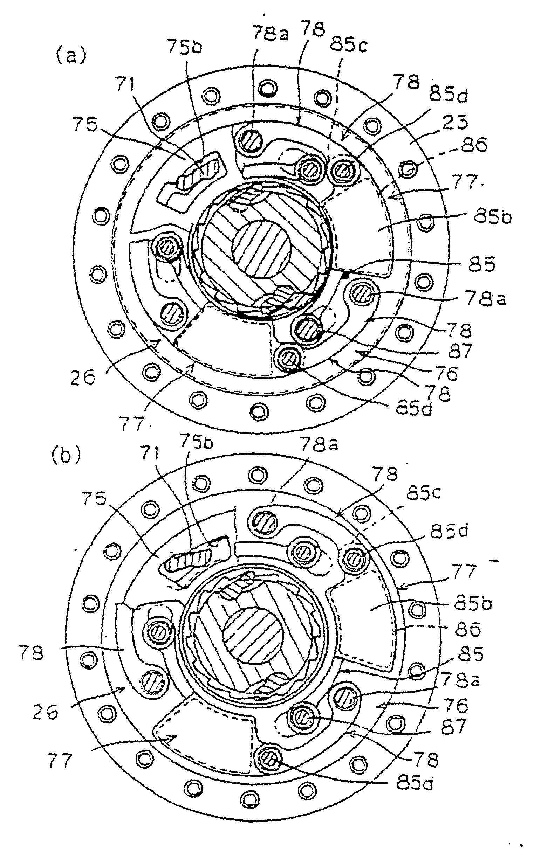

As shown in Figure 11, the clutch-switching mechanism 26 comprises an annular control plate 75 and a moving mechanism 76 for moving the control plate 75 in a circle about the hub axle.

The control plate 75 is supported by a power transmitting body 61 between the linked position shown in Figure 11b and the disengaged position shown in Figure 11a, while allowed to move in a circle about the hub axle. Control windows 75b for controlling the clutch pawls 71 are formed between the inner and outer circumferences of the control plate 75. These control windows 75b are configured in the same manner as in the embodiment described above, and one end of each clutch pawl 71 is inserted into these windows. The control plate 75 is normally pushed by a spring mechanism (not shown) into the disengaged position shown in Figure 11a.

The moving mechanism 76 comprises three rocking weight members 77, links 78 for coupling the weight members 77 and the control plate 75, and a spring mechanism (not shown) for energizing the control plate 75 in the clockwise direction in Figure 11.

The weight members 77 comprise weight retainers 85 swingably mounted on the end face 61c (Figure 10) of the power transmitting body 61 between the first position shown in Figure 11a and the second position shown in Figure 11b (the second position is external in relation to the first position). The weight members 77 also have weights 86, which are mounted on the tips of the weight retainers 85. The three weight retainers 85 are disposed in the same way 120 degrees from each other around the power transmitting body 61. Bosses 85a serving as rocking centres are formed on the bases of the weight retainers 85, and weight mounting sections 85b that accommodate the weights 86 in their interiors are formed on the tips. In addition, link bosses 85c are formed in those areas of the weight mounting sections 85b that are closer to the tips. A rocking axle 87 whose base tip is fixed to the end face 51c of the power transmitting body 61 is mounted on the bosses 85a. Link pins 85d are mounted on the link bosses 85c.

The links 78 are members designed for linking the control plate 75 and the tips of the weight retainers 85, and for moving the control plate 75 in a circle about the hub axle in response to the rocking movement of the tips of the weight members 77. One end of each link 78 is rotatably supported by a link pin 85d, and the other end is rotatably supported by a link pin 78a, which is mounted in the control plate 75.

All other structural features and shifting operations are the same as in the above embodiment, and their description is therefore omitted.

In such an arrangement, the control plate 75 is still linked to the tips of the weight members 77 via links 78 (as in the embodiment described above), making it possible to increase the circular movement of the control plate in relation to the swinging of the weight members 77. In addition, shifting can be performed in accordance with the bicycle speed because the weight members 77 are mounted on the slave 23.

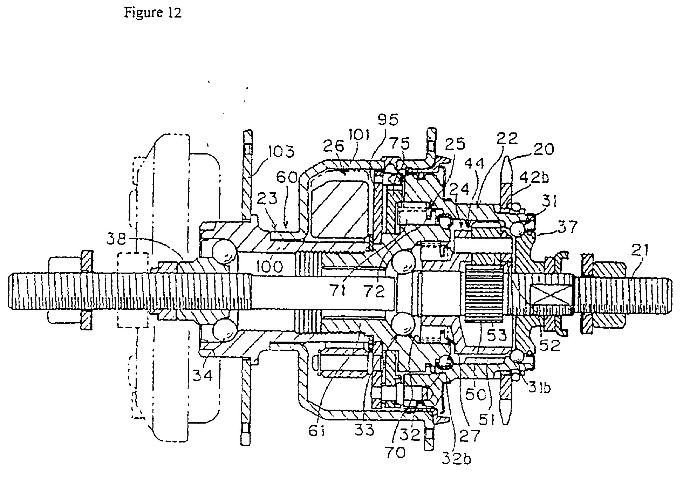

In the two embodiments described above, weight members 77 were mounted on the slave 23, but it is also possible to mount the weight members 77 on the driver 22, as shown in Figure 12. When the weight members 77 are swung by the rotation of the driver 22 in such a manner, the rider can securely shift gears at will because shifting is impossible to perform unless force is applied to the pedals. In the description of a third embodiment that follows, the same symbols are used to denote identical or similar members, and only the significant differences between the structures are described.

In Figure 12, the internal shifter hub 10, which is primarily used on street bikes in the same manner as in the second embodiment, comprises a hub axle 21, a driver 22, a slave 23, a planetary gear mechanism 24, a clutch mechanism 25, a clutch-switching mechanism 26, and a one-way clutch 27, as in the second embodiment.

The driver 22 has a one-piece structure in the same manner as in the second embodiment. A housing space 44 for accommodating the planetary gear mechanism 24 is formed inside the driver 22. A sprocket attachment section 42b consisting of serrations is formed on the outer circumferential surface at the end of the driver 22. The inner-tooth gear 51 of the planetary gear mechanism 24 is formed on the inner circumferential surface of the driver 22. In addition, arm-shaped ball race surfaces 31b and 32b for the bearing components 31 and 32, respectively, are formed such that the inner-tooth gear 51 is sandwiched between them. In all other respects, the structure of the bearing components 31 and 32 is the same as in the embodiments described above. Ratchet teeth 70 that are shaped as sawteeth and that constitute the clutch mechanism 25 are formed on the inner circumferential surface of the left end of the driver 22 in the circumferential direction (for example, at six equidistant positions).

The slave 23 has a hub shell 60 and a power transmitting body 61, which is fixed by being screwed into the hub shell 60. The hub shell 60 has a cylindrical component 100, a right hub flange 101 riveted to the right end (in Figure 12) of the cylindrical component 100, and a left hub flange 103 riveted to the outer circumferential surface at the left end of the cylindrical component 100. All these components may be made from a rolled steel designed for common structural applications. The right hub flange 101 is a member shaped as a stepped cylinder and provided on the inside with a space for accommodating the clutch mechanism 25 or the clutch-switching mechanism 26.

The planetary gear mechanism 24 is similar to that in the second embodiment, and the planetary gears 53 consist of a single gear element. As in the second embodiment, the gear ratio GR will be 0.727 if it is assumed, for example, that the number of teeth Zs on the sun gear 50 is 18, the number of teeth Zr on the inner-tooth gear 51 is 48, and the number of tips Zp of the planetary gears 53 is 14. The clutch mechanism 25 comprises ratchet teeth 70, clutch pawls 71 that mesh with the ratchet teeth 70, and a spring member 72 for energizing the clutch pawls 71. The clutch pawls 71 are swingably mounted on the outer circumferential surface of the power transmitting body 61 while allowed to alternate between a linked state in which they mesh with the ratchet teeth 70, and a disengaged state in which they are separated from the ratchet teeth 70. As in the embodiments described above, the clutch pawls 71 are stopped by the control plate 75 of the clutch-switching mechanism 26.

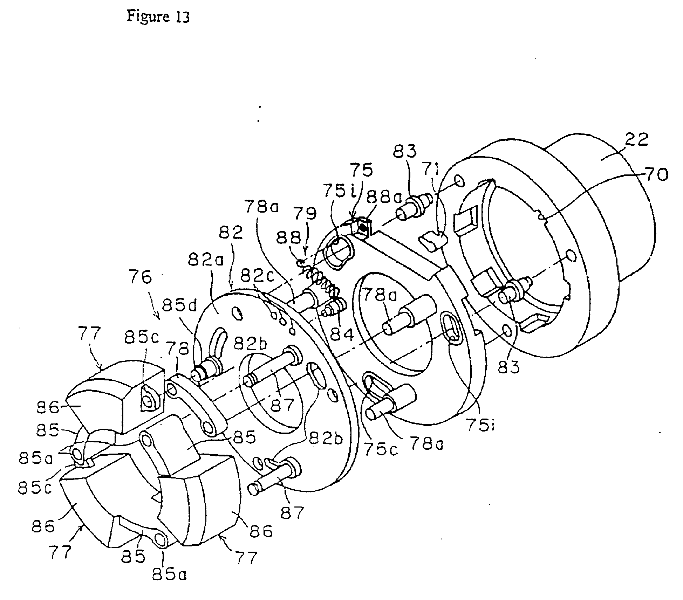

As shown in Figure 13, the clutch-switching mechanism 26 comprises an annular control plate 75 and a moving mechanism 76 for moving the control plate 75 in a circle about the hub axle.

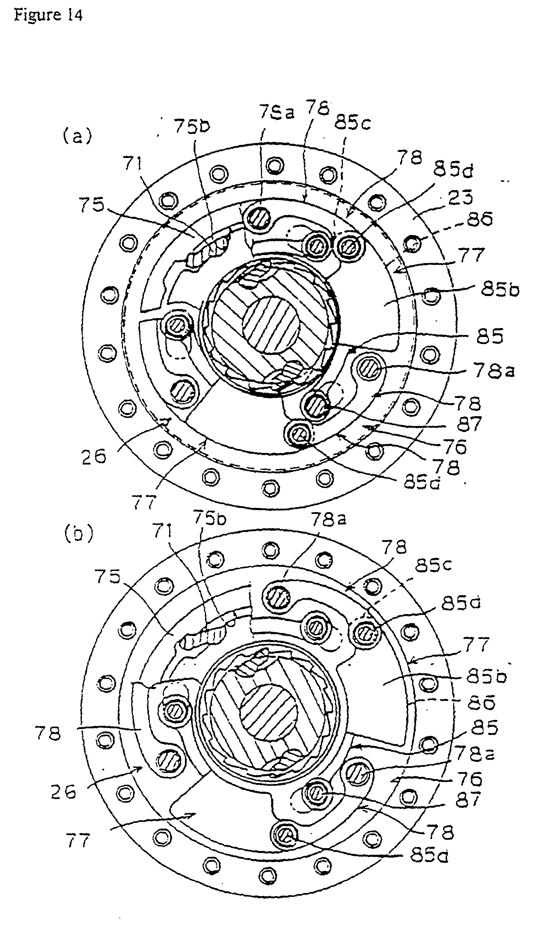

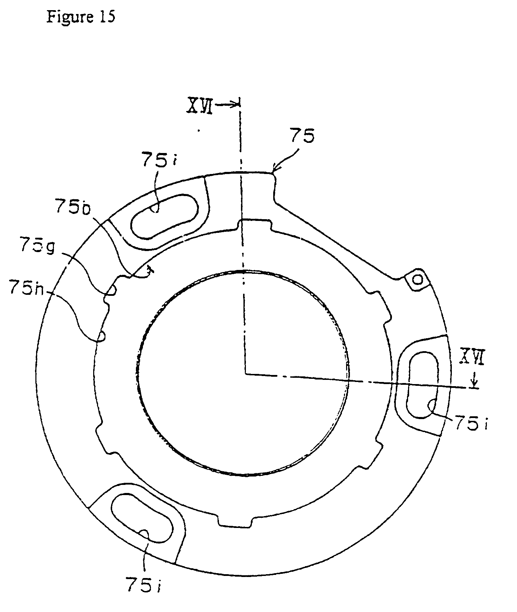

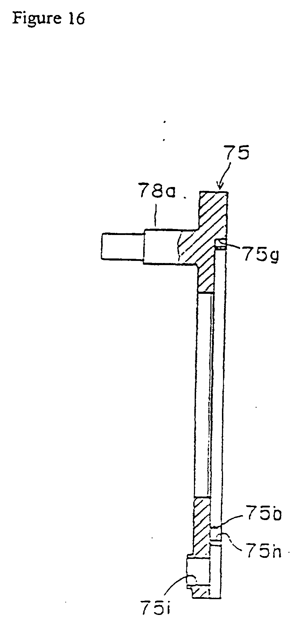

The control plate 75 is supported by a power transmitting body 61 between the linked position shown in Figure 14b and the disengaged position shown in Figure 14a, while allowed to move in a circle about the hub axle. Control recesses 75b for controlling the clutch pawls 71 are formed in the right-side surface of the control plate 75, as shown in Figures 15 and 16. These control recesses 75b comprise circular disengaging recesses 75f formed by hollowing out the right-side surface of the control plate 75, and large-diameter linking recesses 75g formed in the disengaging recesses 75f at six positions spaced at regular intervals in the circumferential direction. The linking recesses 75g are formed at positions that have the same phases as the ratchet teeth 70 when the control plate 75 is in the linked position. Consequently, the clutch pawls 71 mesh with any of the ratchet teeth 70, and rotation in the travelling direction alone is transmitted directly from the driver 22 to the power transmitting body 61 when the control plate 75 is in the linked position, and one end of the clutch pawls 71 rests against the linking recesses 75g of the control recesses 75b. In addition, the driver 22 and the power transmitting body 61 are disengaged, and rotation that has been reduced in speed by the planetary gear mechanism 24 is transmitted from the carrier 52 to the power transmitting body 61 via the one-way clutch 27, when the control plate 75 reaches a disengaged position and the clutch pawls 71 are pressed against the disengaging recesses 75f.

Three link pins 78a are installed upright at regular intervals in the circumferential direction on the left-side surface of the control plate 75. One end of the links 78 described below is rotatably linked to the link pins 78a. The control plate 75 is normally pushed toward the disengaged position shown in Figure 14a by the spring mechanism 79 shown in Figure 13.

As shown in Figure 13, the moving mechanism 76 comprises three rocking weight members 77, three links 78 for linking the weight members 77 and the control plate 75, a spring mechanism 79 for energizing the control plate 75 clockwise in Figure 14, and a discoid weight support 82 disposed between the control plate 75 and the weight members.

The weight members 77 comprise, for example, zinc weight retainers 85 swingably mounted on the weight support 82 between the first position shown in Figure 14a and the second position shown in Figure 14b (the second position is external in relation to the first position). The weight members 77 also have weights 86, which are shaped such that one of their ends is mounted on the tips of the weight retainers 85. The three weight retainers 85 are disposed in the same way 120 degrees from each other around the power transmitting body 61. Bosses 85a serving as rocking centres are formed on the bases of the weight retainers 85, and link bosses 85c are formed on their tips. Rocking axles 87 whose tips are fixed to the left-side surface of the weight support 82 are mounted in the bosses 85a. Link pins 85d are mounted in the link bosses 85c.

The links 78 are members designed for linking the control plate 75 and the tips of the weight retainers 85, and for moving the control plate 75 in a circle about the hub axle in response to the rocking movement of the tips of the weight members 77. One end of each link 78 is rotatably supported by a link pin 85d, and the other end is rotatably supported by a link pin 78a, which is positioned upright on the control plate 75.

The weight support 82 is fixed at a distance from the driver 22 in the axial direction of the hub axle 21 with the aid of three fixing pins 83 positioned upright on the left-side surface of the driver 22. The control plate 75 is disposed between the driver 22 and the weight support 82. For this reason, slits 75i for passing the fixing pins 83 are formed in the control plate 75 at three locations spaced in the circumferential direction. In addition, through holes 82b for passing the link pins 78a designed to link the links 78 and the control plate 75 are formed at three locations spaced in the circumferential direction because the weight support 82 is disposed between the control plate 75 and the weight members 77.

The spring mechanism 79 has a compressed coil spring 88, which is stopped at one end by the control plate 75 and at the other end by the weight support 82 through the intermediary of a lock pin 84. The control plate 75 is provided with a spring stopper 88a, and the weight support 82 is provided with three lock holes 82c. The swing start timing of the weight members 77 can be set at three different levels by mounting the lock pin 84 in one of the lock holes 82c.

Because in this arrangement the weight members 77 are mounted on the driver 22 with the aid of the weight support 82, the control plate 75 is brought into the disengaged position by the spring mechanism 79 and a downshifted state is maintained as long as the driver 22 does not rotate. When the rider starts pedalling, the driver 22 is rotated, and its rotation exceeds a certain rotational speed (which is determined by the energizing force of the spring mechanism, the mass of the weights 86, or the like), the weight members 77 swing outward, and a direct-linked state is established. Gears can therefore be shifted in a secure manner according to rider preferences. In the particular case of bicycles ridden at comparatively low speeds, such as street bikes, shifting gears by rotation on the side of the slave 23 impairs pedalling and causes fatigue when direct linkage is established following resumed pedalling. This drawback can be overcome, however, by mounting the weight members 77 on the driver 22. It should be noted that because the shift timing is slow, it is better to mount the weight members 77 on the slave 23 in the case of racing bicycles ridden at high speeds. All other structural features and shifting operations are the same as in the above embodiments, and their description is therefore omitted.

In such an arrangement, the control plate 75 is still linked to the tips of the weight members 77 via links 78 (as in the embodiments described above), making it possible to increase the circular movement of the control place in relation to the swinging of the weight members 77.

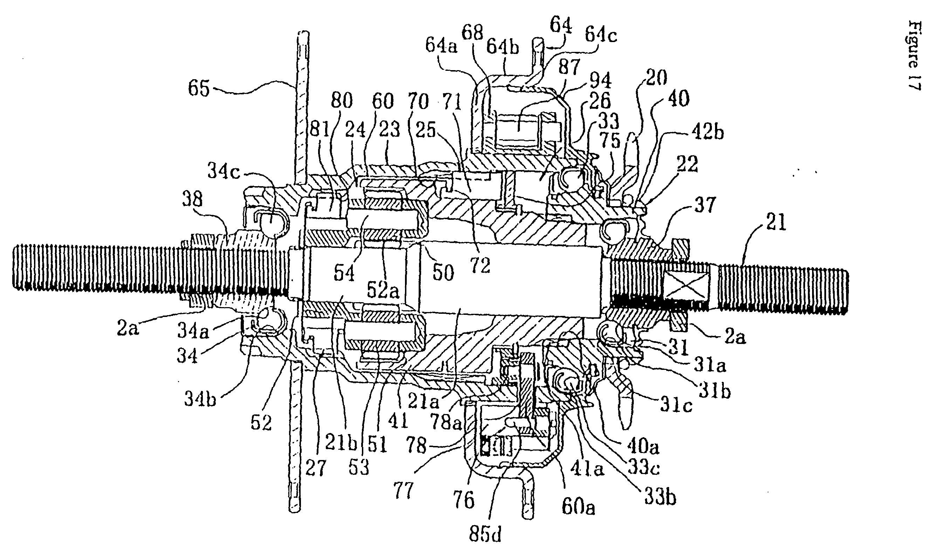

As shown in Figure 17, which shows a fourth embodiment of the present invention, weight members 77 are mounted on a slave 23 in the same manner as in the first or second embodiments, but the weight members 77 are disposed farther outward in relation to the slave 23, enhancing the centrifugal force acting on the weight members 77. In addition, the planetary gear mechanism 24 is disposed on the left side of Figure 17 (unlike in the first, second and third embodiments), reducing the torque applied to the hub axle 21. In the description that follows, the same symbols are used to denote identical or similar members, and only the significant differences between the structures are described.

In Figure 17, the internal shifter hub 10, which is primarily used on street bikes, comprises a hub axle 21, a driver 22, a slave 23, a planetary gear mechanism 24, a clutch mechanism 25, a clutch-switching mechanism 26, and a one-way clutch 27.

The hub axle 21 is a member that is fixed to the rear fork ends 2a of a bicycle frame body 2. A large-diameter portion 21a is formed on the hub axle 21 somewhat to the right (in Figure 16) of the central section, and the sun gear 50 of the planetary gear mechanism 24 is formed on the border with a small-diameter portion 21b on the left side of the large-diameter portion 21a. Hub cone members 37 and 38 having arm-shaped hub cone surfaces 31a and 34a for bearing components 31 and 34, respectively, are screwed onto the mounting portions of the hub axle 21 that lie inward in relation to the rear fork ends 2a.

The driver 22 is a member for transmitting the rotation of a sprocket 20. The driver 22 comprises a first cylindrical component 40 (the right end of this component is rotatably supported by the bearing component 31), and a second cylindrical component 41 that is nonrotatably linked to the first cylindrical component 40 and is rotatably supported by the hub axle 21.

A sprocket attachment section 42b composed of outer serrations is formed on the outer circumferential surface at the right end of the first cylindrical component 40, and a snap ring 45 for fixing the sprocket 20 is secured therein. A hub cone surface 33a for a bearing component 33 is formed on the outer circumferential surface at the left end of the first cylindrical component 40. A ball race surface 31b for the bearing component 31 is formed on the inner circumferential surface at the right end of the first cylindrical component 40, and inner serrations 40a are formed on the inner circumferential surface of the left end. The bearing components 31, 33, and 34 comprise, respectively, the hub cone surfaces 31a, 33a, and 34a; the ball race surfaces 31b, 33b, and 34b; and a plurality of balls 31c, 33c, and 34c interposed between the two surfaces. The ball race surfaces 33b and 34b are formed in a respective manner on the inner circumferential surfaces at the right and left ends of the slave 23.

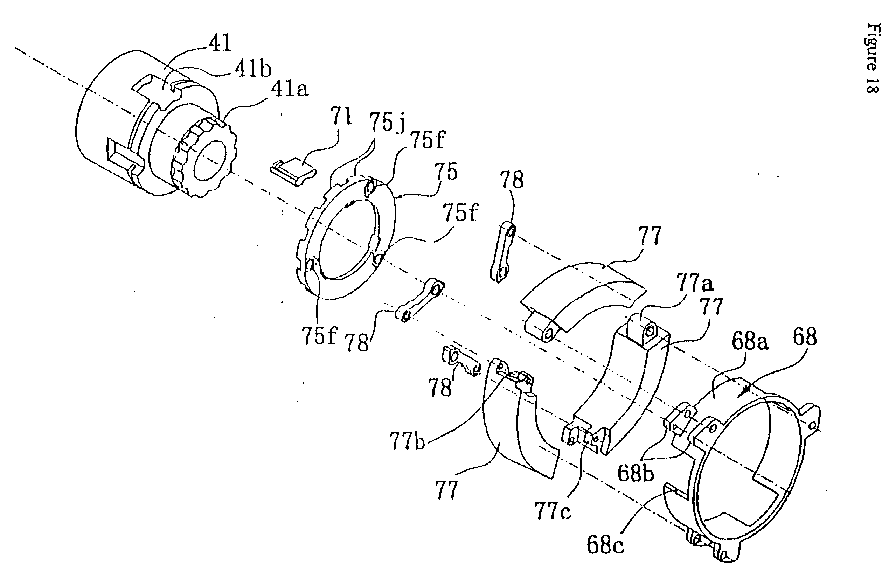

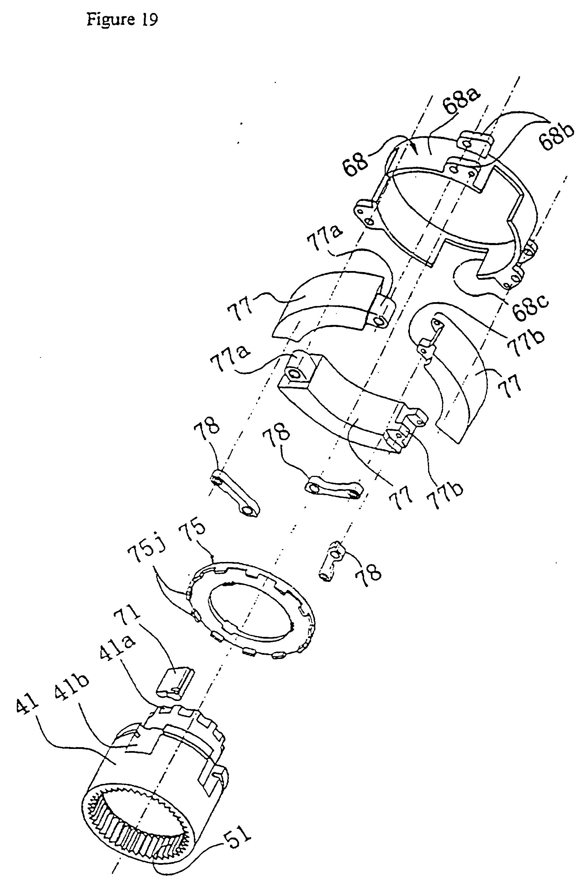

The second cylindrical component 41 is a member that is extended in the axial direction and is nonrotatably linked with the inner circumferential surface of the first cylindrical component 40. The clutch mechanism 25 and the clutch-switching mechanism 26 are disposed around the outside of the second cylindrical component 41. The outer circumferential surface at the right end of the second cylindrical component 41 has a smaller diameter than the outer circumferential surface of the left end, and external serrations 41a for engagement by the internal serrations 40a of the first cylindrical component 40 are formed thereon. In addition, the outer circumferential surface of the large-diameter portion is provided with the housing recesses 41b (Figures 18 and 19) for clutch pawls 71, which are components of the clutch mechanism 25. The inner-tooth gear 51 of the planetary gear mechanism 24 is formed on the inner circumferential surface at the left end of the large-diameter portion.

Forming the driver 22 in such a manner into a two-part structure composed of the first cylindrical component 40 and second cylindrical component 41 makes it possible to mount the planetary gear mechanism 24 left of centre on the hub axle 21 and to position the clutch mechanism 25 and the clutch-switching mechanism 26 between the two components in a compact arrangement. The outside diameter of the entire hub can therefore be reduced.

The slave 23 is a cylindrical member driven by the driver 22 and designed for rotating the rear wheel 7. The slave 23 comprises a hub shell 60 disposed around the outside of the driver 22, and a couple of hub flanges 64 and 65 designed for securing the spokes and nonrotatably fixed around the outside of the hub shell 60 at a distance from each other in the axial direction.

The hub shell 60, which is a stepped cylindrical member (made of a chromium-molybdenum steel, for example) gradually tapering off toward the left end thereof, houses in its interior the driver 22, the clutch mechanism 25, the clutch-switching mechanism 26, and the like. Ratchet teeth 70 for the clutch mechanism 25 and ratchet teeth 80 for the one-way clutch 27 are formed at regular intervals on the inner circumferential surface of the hub shell 60. Openings 60a for passing the links 78 (described below) of the clutch-switching mechanism 26 are formed at three locations in the circumferential direction in the hub shell 60.

The hub flange 64 is nonrotatably riveted to the outer circumferential surface of the hub shell 60. The hub flange 64 comprises a first annular component 64a fixed to the hub shell 60, a cylindrical component 64b extending outward in the axial direction from the outer edge of the first annular component 46a, and a second annular component 64c extending radially outward from the cylindrical component 64b. A space for housing the weight members 77 (described below) of the clutch-switching mechanism 26 is formed around the inside of the cylindrical component 64b of the hub flange 64. This space is covered with a synthetic-resin cover 94. The hub flange 65 is an annular member nonrotatably riveted to the left end of the hub shell 60.

The planetary gear mechanism 24 comprises the sun gear 50 formed on the hub axle 21, the inner-tooth gear 51 formed on the second cylindrical component 41 of the driver 22, a carrier 52 rotatably mounted on the small-diameter portion 21b of the hub axle 21, and three planetary gears 53 rotatably supported on the carrier 52. The carrier 52 is a member shaped as a collar flange with the hub axle 21 passing through it; and three gear housings 52a spaced at regular intervals in the circumferential direction are formed on the outer circumferential surface of this member. Three gear axles 54 for rotatably supporting the planetary gears 53 are fixed to the carrier 52. The planetary gears 53 mesh with the inner-tooth gear 51.

As shown in Figure 17, the clutch mechanism 25 has ratchet teeth 70 (which are formed on the inner circumferential surface of the hub shell 60), clutch pawls 71 that are disposed on the outer circumferential surface of the second cylindrical component 41 of the driver 22 and that are capable of meshing with the ratchet teeth 70, and a spring member 72 for energizing the clutch pawls 71. The ratchet teeth 70 are formed as sawteeth on the inner circumferential surface of the hub shell 60. The clutch pawls 71 are mounted while allowed to alternate between a linked state in which they mesh with the ratchet teeth 70, and a disengaged state in which they are separated from the ratchet teeth 70. The spring member 72, which is positioned in a wound state in a groove 74 formed in the outer circumferential surface of the second cylindrical component 41, pushes the clutch pawls 71 into a linked state. It is only when the clutch pawls 71 are in a linked state and the driver 22 rotates in the travelling direction that the rotation of the clutch mechanism 25 is transmitted to the hub shell 60 of the slave 23.

As shown in Figures 17 through 20, the clutch-switching mechanism 26 comprises a control plate 75 for switching the clutch pawls 71 between a linked state and a disengaged state, a moving mechanism 76 for moving the control plate 75 in a reciprocating fashion about the hub axle, and a weight support 68.

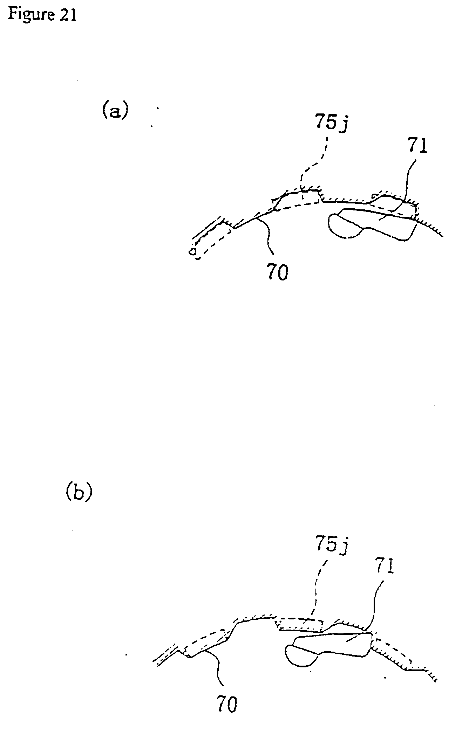

The control plate 75 is a flat annular member rotatably supported in its central portion on the small-diameter portion of the second cylindrical component 41. A plurality of clutch-controlling protrusions 75j extending in the axial direction are formed on the outer edge of the control plate 75 at regular intervals in the circumferential direction. The intervals between the control protrusions 75j are equal to the intervals between the ratchet teeth 70 formed in the hub shell 60. The tips of the clutch pawls 71 facing the moving mechanism 76 are disposed such that they can touch the control protrusions 75j along their inner circumference. The control protrusions 75j are designed for holding the clutch pawls 71 in a disengaged state, and, as shown in Figure 21b, a disengaged state is established when the clutch pawls 71 are positioned between the control protrusions 75j. In addition, link mounting components 75f for rotatably mounting the links 78 of the moving mechanism 76 described below are formed on the outer edges of the surface on the opposite side from the sections constituting the control protrusions 75j of the control plate 75. The controlling arrangement for the clutch pawls 71 is thus simplified because the state of the clutch pawls 71 is controlled with the aid of the control protrusions 75j and the gaps therebetween. In addition, providing numerous control protrusions 75j makes it possible to accelerate shifting even when the clutch pawls 71 and the control plate 75 rotate in relation to each other.

The weight support 68 is nonrotatably mounted on the right side of the hub flange 64 along the outer circumferential surface of the hub shell 60. The weight support 68 comprises a cylindrical component 68a fixed to the outer circumferential surface of the hub shell 60, and two hinge components 68b that extend radially outward and that are disposed on the outer circumferential surface of the cylindrical component 68a at regular intervals in the circumferential direction. The cylindrical component 68a is provided with openings 68c for accommodating the links 78. The weight members 77 of the moving mechanism 76 are swingably supported by the hinge components 68b.

The moving mechanism 76, which is disposed on the right side (in Figure 17) of the control plate 75, comprises three rocking weight members 77, links 78 for coupling the three weight members 77 and the control plate 75, and a spring mechanism 79 for energizing the weight members 77 counterclockwise in Figure 19.

The weight members 77 are swingably mounted on the hinge components 68b of the weight support 68. The weight members 77 are shaped such that they form a curve around the cylindrical component 68a of the weight support 68, and are positioned in the same way 120 degrees apart from each other around the weight support 68. Bosses 77a are formed integrally with the bases of the weight members 77, and link mounting components 77b are formed integrally with the tips of the weight members. Rocking axles 87 pass through the bosses 77a. Both ends of the rocking axles 87, which pass through the bosses 77a, are fixed to the hinge components 68b. Link pins 85d are fixed to the link mounting components 77b. The link pins 85d are designed for the rotatable mounting of the links 78.

The links 78 are members for rotating the braking member 75 in response to the movement of the tips of the weight members 77, which swing about their bases. The control plate 75 and the tips of the weight members 77 are linked at both ends thereof. The links 78 are flat members made of metal. One end of each link is provided with a round hole for inserting the link pins 85d, and the other end is provided with a round hole for inserting a link pin 78a, which is used to achieve linkage with the braking plate 75. The link mounting components 77b are passed through the openings 60a and 68c from positions of linkage with the weight members 77, are extended radially outward, and are linked to the control plate 75.

The spring mechanism 79 comprises three coil springs 88 secured at one end in the tips of the weight members 77, and at the other end in the hinge components 68b. The coil springs 88, which energize the weight members 77 into a disengaged state, allow shift timing to be adjusted by varying the spring force thereof.

As shown in Figure 17, the one-way clutch 27, which may be a pawl type, comprises ratchet teeth 80 formed on the inner circumferential surface of the hub shell 60, clutch pawls 81 mounted on the outer circumferential surface of the carrier 52 of the planetary gear mechanism 24 while allowed to alternate between a linked state and a disengaged state, and a spring member (not shown) for energizing the clutch pawls 81 into a linked state. In the one-way clutch 27, the clutch pawls 81 are normally raised into a linked state, and the rotation of the carrier 52 is transmitted to the hub shell 60 when this carrier rotates in the travelling direction. No rotation is transmitted when the hub shell 60 rotates in the travelling direction at a higher speed than does the carrier 52.

Similar to the first embodiment, the internal shifter hub 10 in the fourth embodiment thus configured has the following paths:

a downshifted power transmission path composed of the driver 22, inner-tooth gear 51, planetary gear mechanism 24, carrier 52, and slave 23; and

a direct-coupled power transmission path composed of the driver 22, clutch mechanism 25, and slave 23.

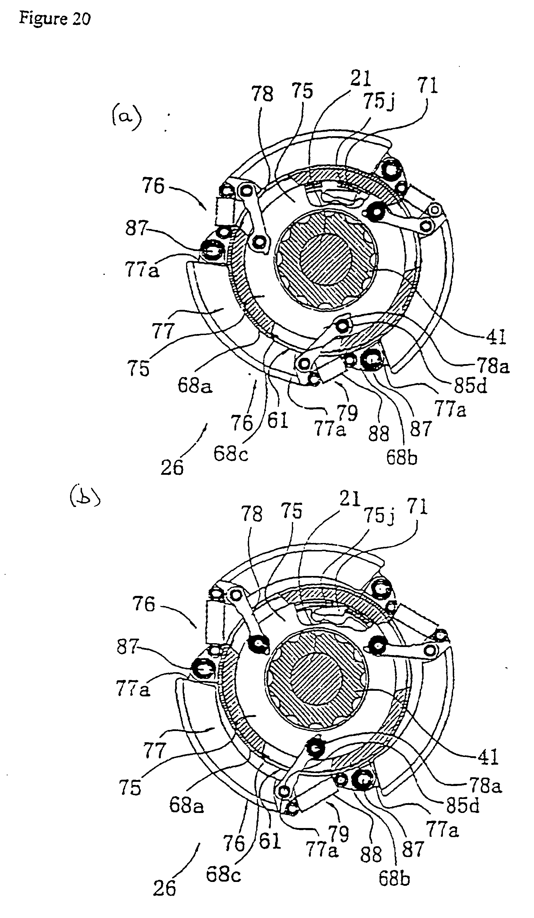

When the rider steps on the pedals during startup, propelling the bicycle, the resulting rotation is transmitted to the driver 22 via the sprocket 20. At this time, the control plate 75 is in the disengaged position shown in Figure 20a, and the clutch pawls 71 are held in a disengaged state by the control plate 75. In the disengaged position, the control protrusions 75j and the ratchet teeth 70 are disposed alternately as shown in Figure 21a, and the clutch pawls 71 are restrained by the control protrusions 75j and are held in the disengaged state. Consequently, there is no linkage between the driver 22 and the hub shell 60, and the rotation of the driver 22 is transmitted to the hub shell 60 along the downshifted power transmission path. As a result, the rotation of the sprocket 20 during startup is transmitted to the hub shell 60 after being reduced in speed. It is therefore possible to lightly step on the pedals during startup.

Moving against the action of the energizing force exerted by the coil springs 88, the weight members 77 swing outward from the disengaged position into the linked position shown in Figure 20b when the hub shell 60 achieves a rotational speed above a certain level. This level is determined by the spring characteristics of the spring mechanism 79 or by the mass of the weight members 77. When this happens, the control plate 75 is rotated clockwise from the disengaged position shown in Figure 20a to the linked position shown in Figure 20b through the intermediary of the links 78. when the control plate 75 has reached the linked position, the control protrusions 75j and the ratchet teeth 70 are in the same phase, as shown in Figure 21b. When the clutch pawls 71 are disposed between the control protrusions 75j, the restraining effect of the control protrusions 75j is released, the tips of the clutch pawls 71 separate from the control protrusions 75j, and the clutch pawls 71 are raised into a linked state by the energizing force of the spring member 72. As a result, the tips of the clutch pawls 71 engage the ratchet teeth 70, the rotation of the driver 22 in the travelling direction is transmitted directly to the power transmitting body 61 along the direct-coupled power transmission path, and the rotation of the sprocket 20 is transmitted unchanged to the rear wheel 7. Consequently, an upshift is performed once the rotational speed has exceeded a certain level. There is no reduction in the transmission efficiency of the planetary gear mechanism 24 during this regular ride because the driver 22 and the slave 23 are coupled directly. Because at this time the weight members 77 are disposed on the outside of the hub shell 60, large centrifugal forces can be applied to the weight members 77 even when the rotational speed is low. Better response can therefore be achieved during shifting, and gears can be changed faster.

When the rotational speed of the hub shell 60 drops below a prescribed level during cornering or the like, the weight members 77 are returned to their initial disengaged state by the coil springs 88, the clutch pawls 71 are brought into a disengaged state by the control protrusions 75j, and the rotation of the driver 22 is transmitted to the slave 23 along the downshifted power transmission path.

In this case, large centrifugal forces act on the weight members 77 because the weight members 77 are mounted around the outside of the hub shell 60. Shifting can therefore be performed instantaneously in reaction to bicycle speed.

In such an arrangement, the control plate 75 is still linked to the tips of the weight members 77 via the links 78 (as in the embodiments described above), making it possible to increase the circular movement of the control plate in relation to the swinging of the weight members 77.

The structure of the power transmitter is not limited to a planetary gear mechanism alone and may also include Cycle Shifters® and other compact shifting mechanisms.

The structure of the interlocking members for moving the control member in response to the movement of the weight members is not limited to links alone and may also include structures containing sliding pins and slits, cam-containing structures, and other structures in which the control plate is caused to move in a circle in response to the movement of those ends of the weight members that lie on the opposite side from the centre of rocking of these members.

In the embodiments described above, the speed was changed from downshifted to directly coupled, but changing the speed from directly coupled to upshifted is also possible. In this case, the driver 22 should be linked to the carrier 52, and power should be transmitted from the carrier 52 to the inner-tooth gear 51, as shown in Figure 4b. At this time, a wide range of gear ratios can be obtained with an inner-tooth gear whose outside diameter is less than that of a single gear element if the second gear element 53b (which, of the two gear elements 53a and 53b, has the larger diameter) is caused to mesh with the inner-tooth gear 51, and the small-diameter first gear element 53a is caused to mesh with the sun gear 50. In addition, the carrier 52 and the driver 22 should be linked together with the aid of the structure shown in Figure 4a if the goal is obtain a gear ratio corresponding to a cross ratio.

Although the fourth embodiment above involved moving the slave 23 in response to the movement of the weight members 77, it is also possible to use a structure in which the weight members 77 are moved in response to the movement of the driver, as in the third embodiment.

According to the present invention, the revolution path of the interlocking member can be increased in relation to the rocking of the weight member, and the circular movement of the braking member can be extended because the control member is caused by the interlocking member to move in a circle in response to the movement of one end of the weight member (this end is set apart from the centre of rocking, which is located near the other end of the weight member).

**Claims**

1. An internal bicycle shifter hub (10) for changing the speed of rotation of an input unit at a selected gear ratio and transmitting the result to an output unit, and allowing said gear ratio to be switched by centrifugal force, wherein said internal bicycle shifter hub (10) comprises:

   a hub axle (21) fixable on a bicycle frame (1);
   a driver (22) that can rotate about said hub axle (21) and that can be linked to said input unit; a slave (23) that can rotate about said hub axle (21) and that can be linked to said output unit;
   a power transmitting mechanism (61) disposed between said driver (22) and slave (23) and designed to change the speed of rotation received from said driver (22) and to transmit the result to said slave (23);
   a clutch mechanism (25) for linking and disengaging said slave (23) and said driver (22); and
   a clutch-switching mechanism (26) having a weight member (77) which is swung about a first of its ends from a first position on the inner circumference to a second position on the outer circumference under the action of a centrifugal force created by rotation about said hub axle (21), a control member (75) capable of moving in a circle about said hub axle (21) between a linked position in which said clutch mechanism (25) is in a linked state and a disengaged position in which said mechanism is in a disengaged state;

   whereby the clutch-switching mechanism (26) further comprises an interlocking mechanism for rotating said control member (75) in response to the movement of a second end of said weight member (77), **characterized in that** said interlocking mechanism comprises a first link pin (85d) attached to the weight member (77), a second link pin (78a) attached to the control member (75), and a link member (78) attached between the first and second link pins (85d, 78a) for separating and linking said control member (75) and the second end of said weight member (77) over a predescribed distance.

2. An internal bicycle shifter hub (10) according to Claim 1, a weight is swingably mounted by one of its ends on said slave (23) and which is swung from said first position on the inner circumference to said second position on the outer circumference under the action of a centrifugal force exerted by rotation of said slave (23).

3. An internal bicycle shifter according to Claim 1, wherein said weight member (77) is swingably mounted by one of its ends on said driver (22) and which is swung from said first position on the inner circumference to said second position on the outer circumference under the action of a centrifugal force exerted by the rotation of said driver (22).

4. An internal bicycle shifter hub (10) as defined in any preceding claim, wherein said clutch-switching mechanism (26) is further provided with a first energizing member (76) for pushing said control member (75) toward said disengaged position or linked position.

5. An internal bicycle shifter hub (10) as defined in any preceding claim, wherein said salve is partially disposed around the inside of said driver (22); said clutch mechanism (25) comprising:

   a linking pawl element (71) that is mounted on the outer circumferential surface of said slave (23) while allowed to swing between a linked state and a disengaged state, and that is switched between said linked state and said disengaged state by said control member (75);
   a linking tooth element (70) that is provided to the inner circumferential surface of said driver (22) and that is capable of stopping the linking pawl element (71) in said linked state; and a second energizing member (72) for pushing said linking pawl element (71) into said linked state.

6. An internal bicycle shifter hub (10) as defined in Claim 5, wherein said driver (22) is provided with said linking tooth element (70) such that the linking pawl element (71) in said linked state is not stopped when said driver (22) rotates in the opposite direction form the travelling direction.

7. An internal bicycle shifter hub (10) as defined in any preceding claim, wherein said power transmitting mechanism (61) is a planetary gear mechanism (24) comprising an inner-tooth gear (51) linkable to said driver (22), a sun gear (50) provided to the outer circumferential surface of said hub axle (21), a plurality of planetary gears (53) that mesh with said inner-tooth gear (51) and sun gear (50), and a frame body (52) that is capable of rotating about said hub axle (21), that rotatably supports said planetary gears (53), and that can be linked to said slave (23).

8. An internal bicycle shifter hub (10) as defined in Claim 7, wherein said inner-tooth gear (51) is formed integrally with the inner circumferential surface of said driver (22), and said sun gear (50) is formed integrally with the outer circumferential surface of said hub axle (21).

9. An internal bicycle shifter hub (10) as defined in any of Claims 1 to 6, wherein said power transmitting mechanism (61) is a planetary gear mechanism (24) comprising an inner-tooth gear (51) linkable to said slave (23), a sun gear (50) provided to the outer circumferential surface of said hub axle (21), a plurality of planetary gears (53) that mesh with said inner-tooth gear (51) and sun gear (50), and a frame body (52) that is capable of rotating about said hub axle (21), that rotatably supports said planetary gears (53), that rotatably supports said planetary gears (53), and that can be linked to said driver (22).

10. An internal bicycle shifter hub (10) as defined in any of Claim 7 to 9, wherein said planetary gears (53) comprise:

   a small-diameter first gear element (53a) for meshing with said inner-tooth gear (51); and
   a large-diameter second gear element (53b) that is disposed concentrically with, and in proximity to, the axial direction of said first gear element, and that is designed to mesh with said sun gear (50).

11. An internal bicycle shifter hub (10) as defined in any of Claims 7 to 9, wherein said planetary gears (53) comprise:

   a small-diameter first gear element (53a) for meshing with said sun gear (50); and
   a large-diameter second gear element (53b) that is disposed concentrically with, and in proximity to, the axial direction of said first gear element, and that is designed to mesh with said inner-tooth gear (51).

12. An internal bicycle shifter hub (10) as defined in any preceding claim, further comprising a one-way clutch (27) that is disposed between said planetary gear mechanism (24) and said slave (23) and that causes said slave (23) to rotate in the travelling direction in response to the rotation of said planetary gear mechanism (24) in the travelling direction.

13. An internal bicycle shifter hub (10) as defined in Claim 12, wherein said one-way clutch (27) is disposed between said slave (23) and the frame body (52) of said planetary gear mechanism (24).

14. An internal bicycle shifter hub (10) as defined in Claim 2, wherein said weight member (77) is disposed on the outer circumference of said slave (23),
   said control member (75) is disposed on the inner circumference of said slave (23); and
   said link member (78) passes through said slave (23) and links said weight member (77) and said control member (75).

15. An internal bicycle shifter hub (10) as defined in Claim 14, wherein said driver (22) comprises a first driving member (40) linked to said input unit, and a second driving member (41) that is aligned with said first driving member (40) in the direction of said hub axle (21) and that is nonrotatably linked to said first driving element; and
   said slave (23) is disposed on the outer circumference of said second driving member (41).

16. An internal bicycle shifter hub (10) as defined in Claim 15, wherein said power transmitting mechanism (61) is disposed between said hub axle (21) and the inner circumference of said second driving member (41).

17. An internal bicycle shifter hub (10) as defined in Claim 16, wherein said power transmitting mechanism (61) is a planetary gear mechanism (24) comprising an inner-tooth gear (51) formed on the inner circumferential surface of said second driving member (41), a sun gear (50) provided to the outer circumferential surface of said hub axle (21) such that meshing with said inner-tooth gear (51) is achieved, a plurality of planetary gears (53) that mesh with said inner-tooth gear (51) and sun gear (50), and a frame body (52) that is capable of rotating about said hub axle (21), that rotatably supports said planetary gears (53), and that can be linked to said slave (23).

**Revendications**

1. Moyeu interne de changement de vitesse (10) pour un vélo, destiné à changer la vitesse de rotation d'une unité d'entrée à un rapport de vitesse sélectionné et à transmettre le résultat à une unité de sortie et à permettre la commutation dudit rapport de vitesse par une force centrifuge, dans lequel ledit moyeu interne de changement de vitesse de vélo (10) comprend :

un essieu de moyeu (21) pouvant être fixé sur un châssis de vélo (1) ; une roue motrice (22) pouvant tourner autour dudit essieu de moyeu (21) et pouvant être reliée à ladite unité d'entrée ; un cylindre secondaire (23) pouvant tourner autour dudit essieu de moyeu (21) et pouvant être relié à ladite unité de sortie ; un mécanisme de transmission de puissance (61) agencé entre ladite roue motrice (22) et ledit cylindre secondaire (23) et conçu de façon à changer la vitesse de rotation reçue à partir de ladite roue motrice (22) et à transmettre le résultat au dit cylindre secondaire (23) ;
un dispositif d'embrayage (25) pour relier et désengager ledit cylindre secondaire (23) et ladite roue motrice (22) ; et
un dispositif de commutation d'embrayage (26) ayant un élément de poids (77) qui est entraîné à pivoter autour d'une première de ses extrémités, d'une première position sur la circonférence interne à une seconde position sur la circonférence externe sous l'action d'une force centrifuge créée par la rotation autour dudit essieu de moyeu (21), un élément de commande (75) pouvant se déplacer en cercle autour dudit essieu de moyeu (21) entre une position de liaison dans laquelle ledit dispositif d'embrayage (25) est à l'état de liaison et une position de désengagement dans laquelle ledit dispositif est à l'état désengagé ;

moyennant quoi le dispositif de commutation d'embrayage (26) comprend en outre un dispositif d'interverrouillage pour entraîner en rotation ledit élément de commande (75) en réponse au mouvement d'une seconde extrémité dudit élément de poids (77), **caractérisé en ce que** le dispositif d'interverrouillage comprend une première broche de liaison (85d) attachée à l'élément de poids (77), une seconde broche de liaison (78a) attachée à l'élément de commande (75) et un élément de liaison (78) attaché entre les première et seconde broches de liaison (85d, 78a) pour séparer et relier ledit élément de commande (75) et la seconde extrémité dudit élément de poids (77) sur une distance prédéterminée.

2. Moyeu interne de changement de vitesse (10) pour un vélo selon la revendication 1, dans lequel un poids est monté de manière pivotante à une de ses extrémités sur ledit cylindre secondaire (23) et est entraîné à pivoter de ladite première position sur la circonférence interne à ladite seconde position sur la circonférence externe sous l'action d'une force centrifuge exercée par la rotation dudit cylindre secondaire (23).

3. Moyeu interne de changement de vitesse (10) pour un vélo selon la revendication 1, dans lequel ledit élément de poids (77) est monté de manière pivotante à une de ses extrémités sur ladite roue motrice (22) et est entraîné à pivoter de ladite première position sur la circonférence interne à ladite seconde position sur la circonférence externe sous l'action d'une force centrifuge exercée par la rotation dudit cylindre secondaire (22).

4. Moyeu interne de changement de vitesse (10) pour un vélo selon l'une quelconque des revendications précédentes, dans lequel ledit dispositif de commutation d'embrayage (26) est en outre équipé d'un élément d'activation (76) pour pousser ledit élément de commande (75) vers ladite position de désengagement ou ladite position de liaison.

5. Moyeu interne de changement de vitesse (10) pour un vélo selon l'une quelconque des revendications précédentes, dans lequel ledit cylindre secondaire est partiellement agencé autour de la partie intérieure de ladite roue motrice (22) ; ledit dispositif d'embrayage (25) comprenant :

un élément formant cliquet de liaison (71) qui est monté sur la surface circonférentielle externe dudit cylindre secondaire (23) tout en étant autorisé à pivoter entre un état de liaison et un état de désengagement et qui est commuté entre ledit état de liaison et ledit état de désengagement par ledit élément de commande (75) ;
un élément formant dent de liaison (70) qui est fourni au niveau de la surface circonférentielle interne dudit cylindre secondaire (22) et qui peut arrêter l'élément formant cliquet de liaison (71) au dit état de liaison ; et un second élément d'activation (72) pour pousser ledit élément formant cliquet de liaison (71) dans ledit état de liaison.

6. Moyeu interne de changement de vitesse (10) pour un vélo selon la revendication 5, dans lequel ledit cylindre secondaire (22) est pourvu dudit élément formant dent de liaison (70) de sorte que l'élément formant cliquet de liaison (71) dans ledit état de liaison ne soit pas arrêté quand ledit cylindre secondaire (22) tourne suivant la direction opposée à la direction de course.

**7.** Moyeu interne de changement de vitesse (10) pour un vélo selon l'une quelconque des revendications précédentes, dans lequel ledit dispositif de transmission de puissance (61) est un dispositif à engrenages planétaires (24) comprenant un engrenage intérieur (51) pouvant être relié au dit cylindre secondaire (22), un engrenage planétaire (50) fourni au niveau de la surface circonférentielle externe dudit essieu de moyeu (21), une pluralité d'engrenages planétaires (53) qui entrent en engrènement avec ledit engrenage intérieur (51) et ledit engrenage planétaire (50) et un corps formant cadre (52) qui peut tourner autour dudit essieu de moyeu (21), qui supporte de manière rotative lesdits engrenages planétaires (53) et qui peut être relié au dit cylindre secondaire (23).

**8.** Moyeu interne de changement de vitesse (10) pour un vélo selon la revendication 7, dans lequel ledit engrenage interne (51) est formé d'un seul tenant avec la surface circonférentielle interne de ladite roue motrice (22) et ledit engrenage planétaire (50) est formé d'un seul tenant avec la surface circonférentielle externe dudit essieu de moyeu (21).

**9.** Moyeu interne de changement de vitesse (10) pour un vélo selon l'une quelconque des revendications 1 à 6, dans lequel ledit dispositif de transmission de puissance (61) est un dispositif à engrenages planétaires (24) comprenant un engrenage intérieur (51) pouvant être relié au dit cylindre secondaire (23), un engrenage planétaire (50) fourni au niveau de la surface circonférentielle externe dudit essieu de moyeu (21), une pluralité d'engrenages planétaires (53) qui entrent en engrènement avec ledit engrenage intérieur (51) et ledit engrenage planétaire (50) et un corps formant cadre (52) qui peut tourner autour dudit essieu de moyeu (21), qui supporte de manière rotative lesdits engrenages planétaires (53) et qui peut être relié à ladite roue motrice (22).

**10.** Moyeu interne de changement de vitesse (10) pour un vélo selon l'une quelconque des revendications 7 à 9, dans lequel lesdits engrenages planétaires (53) comprennent :

un premier élément d'engrenage de petit diamètre (53a) pour entrer en engrènement avec ledit engrenage intérieur (51) ; et un second élément d'engrenage de grand diamètre (53b) qui est agencé de manière concentrique à, et à proximité de, la direction axiale dudit premier élément d'engrenage et qui est conçu pour entrer en engrènement avec ledit engrenage planétaire (50).

**11.** Moyeu interne de changement de vitesse (10) pour un vélo selon l'une quelconque des revendications 7 à 9, dans lequel lesdits engrenages planétaires (53) comprennent :

un premier élément d'engrenage de petit diamètre (53a) pour entrer en engrènement avec ledit engrenage planétaire (50) ; et un second élément d'engrenage de grand diamètre (53b) qui est agencé de manière concentrique à, et à proximité de, la direction axiale dudit premier élément d'engrenage et qui est conçu pour entrer en engrènement avec ledit engrenage intérieur (51).

**12.** Moyeu interne de changement de vitesse (10) pour un vélo selon l'une quelconque des revendications précédentes, comprenant en outre un embrayage unidirectionnel (27) qui est agencé entre ledit dispositif à engrenages planétaires (24) et ledit cylindre secondaire (23) et qui entraîne la rotation dudit cylindre secondaire (23) suivant la direction de course en réponse à la rotation dudit dispositif à engrenages planétaires (24) suivant la direction de course.

**13.** Moyeu interne de changement de vitesse (10) pour un vélo selon la revendication 12, dans lequel ledit embrayage unidirectionnel (27) est agencé entre ledit cylindre secondaire (23) et le corps formant cadre (52) dudit dispositif à engrenages planétaires (24).

**14.** Moyeu interne de changement de vitesse (10) pour un vélo selon la revendication 2, dans lequel ledit élément de poids (77) est agencé sur la circonférence externe dudit cylindre secondaire (23),
ledit élément de commande (75) est agencé sur la circonférence interne dudit cylindre secondaire (23) ; et
ledit élément de liaison (78) passe à travers ledit cylindre secondaire (23) et relie ledit élément de poids (77) et ledit élément de commande (75).

**15.** Moyeu interne de changement de vitesse (10) pour un vélo selon la revendication 14, dans lequel ladite roue motrice (22) comprend un premier élément d'entraînement (40) relié à ladite unité d'entrée et un second élément d'entraînement (41) qui est aligné avec ledit premier élément d'entraînement (40) suivant la direction dudit essieu de moyeu (21) et qui relié de manière non rotative au dit premier élément d'entraînement ; et
ledit cylindre secondaire (23) est agencé sur la circonférence externe dudit second élément d'entraînement (41).

**16.** Moyeu interne de changement de vitesse (10) pour un vélo selon la revendication 15, dans lequel ledit dispositif de transmission de puissance (61) est agencé entre ledit essieu de moyeu (21) et la circonférence interne dudit second élément d'entraînement (41).

**17.** Moyeu interne de changement de vitesse (10) pour un vélo selon la revendication 16, dans lequel ledit dispositif de transmission de puissance (61) est un dispositif à engrenages planétaires (24) comprenant un engrenage intérieur (51) formé sur la surface circonférentielle interne dudit second élément d'entraînement (41), un engrenage planétaire (50) fourni sur la surface circonférentielle externe dudit essieu de moyeu (21) de façon à réaliser un engrènement avec ledit engrenage intérieur (51), une pluralité d'engrenages planétaires (53) qui entrent en engrènement avec ledit engrenage intérieur (51) et l'engrenage planétaire (50) et un corps formant cadre (52) qui peut tourner autour dudit essieu de moyeu (21), qui supporte de manière rotative lesdits engrenages planétaires (53) et qui peut être relié au dit cylindre secondaire (23).

**Patentansprüche**

**1.** Naben-Innenschaltung (10) für ein Fahrrad zur Änderung der Umlaufgeschwindigkeit einer Antriebseinrichtung bei einer ausgewählten Übersetzung und Übertragung des Ergebnisses auf eine Abtriebseinrichtung, wobei die Übersetzung durch Zentrifugalkraft umgeschaltet werden kann, wobei die Naben-Innenschaftung (10) für ein Fahrrad folgendes aufweist:

eine auf einem Fahrradrahmen (1) befestigbare Nabenachse (21);
ein Antriebselement (22), weiches um die Nabenachse (21) rotieren kann und mit der Abtriebseinrichtung verbunden werden kann;
ein Nehmerelement (23), welches um die Nabenachse (21) rotieren kann und mit der Abtriebseinrichtung verbunden werden kann;
einen zwischen dem Antriebselement (22) und dem Nehmerelement (23) angeordneten Kraftübertragungsmechanismus (61), welcher dafür vorgesehen ist, die von dem Antriebselement (22) abgenommene Umlaufgeschwindigkeit zu ändern und das Ergebnis auf das Nehmerelement (23) zu übertragen;
einen Kupplungsmechanismus (25) zum Verbinden und Lösen des Nehmerelements (23) und des Antriebselement (22); und
einen Kupplungsumschaltmechanismus (26) mit einem Gewichtselement (77), welches aufgrund einer durch Umlaufen um die Nabenachse (21) entstehenden Zentrifugalkraft von einer ersten Position auf dem Innenumfang um sein erstes Ende in eine zweite Position auf dem Außenumfang geschwenkt wird, ein Steuerelement (75), welches um die Nabenachse (21) herum zwischen einer ausgelenkten Position, in welcher der Kupplungsmechanismus (25) in einem ausgelenkten Zustand ist, und einer ausgekuppelten Position, in welcher der Mechanismus in einem ausgekuppelten Zustand ist, im Kreis beweglich ist;

wobei der Kupplungsumschaltmechanismus (26) weiterhin einen Verriegelungsmechanismus aufweist, um das Steuerelement (75) als Reaktion auf die Bewegung des zweiten Endes des Gewichts (77) zu drehen,
**dadurch gekennzeichnet, dass**
der Verriegelungsmechanismus einen ersten Verbindungszapfen (85d) aufweist, welcher an dem Gewichtselement (77) angebracht ist, einen zweiten Verbindungszapfen (78a), welcher an dem Steuerelement (75) angebracht ist, und ein Verbindungselement (78), welches zwischen dem ersten und dem zweiten Verbindungszapfen (85d, 78a) angebracht ist, welches das Steuerelement (75) und das zweite Ende des Gewichtselements (77) in einem vorgegebenen Abstand trennt und verbindet.

**2.** Naben-Innenschaltung (10) für ein Fahrrad gemäß Anspruch 1, wobei
ein Gewicht um eines seiner Enden schwenkbar auf dem Nehmerelement (23) befestigt ist und aufgrund einer durch Umlaufen des Nehmerelements (23) aufgebrachten Zentrifugalkraft von der ersten Position auf dem Innenumfang in die zweite Position auf dem Außenumfang geschwenkt wird.

**3.** Naben-Innenschaltung für ein Fahrrad gemäß Anspruch 1, wobei
das Gewichtselement (77) um eines seiner Enden schwenkbar auf dem Antriebselement (22) befestigt ist und aufgrund einer durch Umlaufen des Antriebselements (22) aufgebrachten Zentrifugalkraft von der ersten Position auf dem Innenumfang in die zweite Position auf dem Außenumfang geschwenkt wird.

**4.** Naben-Innenschaltung (10) für ein Fahrrad gemäß einem der vorangehenden Ansprüche, wobei der Kupplungsumschaltmechanismus (26) außerdem mit einem ersten Spannelement (76) versehen ist, welches das Steuerelement (75) in die ausgekuppelte bzw. ausgelenkte Position schiebt.

5. Naben-Innenschaltung (10) für ein Fahrrad gemäß einem der vorangehenden Ansprüche, wobei das Nehmerelement teilweise um die Innenseite des Antriebselements (22) angeordnet ist; wobei der Kupplungsmechanismus (25) folgendes aufweist:

ein Klinkenverbindungselement (71) welches an der Außenumfangsfläche des Nehmerelements (23) so angebracht ist, dass es zwischen einem ausgelenkten Zustand und einem ausgekuppelten Zustand hin und herschwenken kann und durch das Steuerelement (75) zwischen dem ausgelenkten Zustand und dem ausgekuppelten Zustand umgeschaltet wird;
ein gezahntes Verbindungselement (70), welches an der Innenumfangsfläche des Antriebselements (22) vorgesehen ist und welches das Klinkenverbindungselement (71) in dem ausgelenkten Zustand arretieren kann; und
ein zweites Spannelement (72), welches das Klinkenverbindungselement (71) in den ausgelenkten Zustand schiebt.

6. Naben-Innenschaltung (10) für ein Fahrrad gemäß Anspruch 5, wobei
das Antriebselement (22) mit dem gezahnten Verbindungselement (70) versehen ist, so dass das Klinkenverbindungselement (71) nicht in dem ausgelenkten Zustand arretiert wird, wenn das Antriebselement (22) in einer Richtung entgegengesetzt zur Fahrtrichtung umläuft.

7. Naben-Innenschaltung (10) für ein Fahrrad gemäß einem der vorangehenden Ansprüche, wobei
der Kraftübertragungsmechanismus (61) ein Planetengetriebe (24) ist und folgendes aufweist: ein mit dem Antriebselement (22) verbindbares Innenzahnrad (51), ein Sonnenrad (50), welches auf der Außenumfangsfläche der Nabenachse (21) vorgesehen ist, eine Vielzahl von Planetenrädern (53), welche mit dem Innenzahnrad (51) und dem Sonnenrad (50) kämmen, sowie einen Rahmen (52), welcher um die Nabenachse (21) drehbar ist, auf welchem die Planetenräder (53) drehbar gelagert sind und welches mit dem Nehmerelement (23) verbunden werden kann.

8. Naben-Innenschaltung (10) für ein Fahrrad gemäß Anspruch 7, wobei
das Innenzahnrad (51) mit der Innenumfangsfläche des Antriebselements (22) einstückig ausgebildet ist, und das Sonnenrad (50) mit der Außenumfangsfläche der Nabenachse (21) einstückig ausgebildet ist.

9. Naben-Innenschaltung (10) für ein Fahrrad gemäß einem der Ansprüche 1 bis 6, wobei der Kraftübertragungsmechanismus (61) ein Planetengetriebe (24) ist und folgendes aufweist: ein mit dem Nehmerelement (23) verbindbares Innenzahnrad (51), ein Sonnenrad (50), welches auf der Außenumfangsfläche der Nabenachse (21) vorgesehen ist, eine Vielzahl von Planetenrädern (53), welche mit dem Innenzahnrad (51) und dem Sonnenrad (50) kämmen, sowie ein Rahmen (52), welcher um die Nabenachse (21) drehbar ist, auf welchem die Planetenräder (53) drehbar gelagert sind, auf welchem die Planetenräder (53) drehbar gelagert sind und welches mit dem Antriebselement (22) verbunden werden kann.

10. Naben-Innenschaltung (10) für ein Fahrrad gemäß einem der Ansprüche 7 bis 9, wobei die Planetenräder (53) folgendes aufweisen:

ein erstes Getriebeelement (53a) mit kleinem Durchmesser, welches mit dem Innenzahnrad (51) kämmt; und
ein zweites Getriebeelement (53b) mit großem Durchmesser, welches konzentrisch zu und nahe der Axialrichtung des ersten Getriebeelements angeordnet ist und welches dazu vorgesehen ist, dass es mit dem Sonnenrad (50) kämmt.

11. Naben-Innenschaltung (10) für ein Fahrrad gemäß einem der Ansprüche 7 bis 9, wobei die Planetenräder (53) folgendes aufweisen:

ein erstes Getriebeelement (53a) mit kleinem Durchmesser, welches mit dem Sonnenrad (50) kämmt; und
ein zweites Getriebeelement (53b) mit großem Durchmesser, welches konzentrisch zu und nahe der Axialrichtung des ersten Getriebeelements angeordnet ist und welches dazu vorgesehen ist, dass es mit dem Innenzahnrad (51) kämmt.

12. Naben-Innenschaltung (10) für ein Fahrrad gemäß einem der vorangehenden Ansprüche, welche weiterhin aufweist:

eine zwischen dem Planetengetriebe (24) und dem Nehmerelement (23) angeordnete Einwegkupplung (27), welche bewirkt, dass das Nehmerelement (23) in Fahrtrichtung umläuft als Reaktion auf die Rotation des Planetengetriebes (24) in Fahrtrichtung.

13. Naben-Innenschaltung (10) für ein Fahrrad gemäß Anspruch 12, wobei
die Einwegkupplung (27) zwischen dem Nehmerelement (23) und dem Rahmen (52) des Planetengetriebes (24) angeordnet ist.

14. Naben-Innenschaltung (10) für ein Fahrrad gemäß Anspruch 2, wobei
das Gewichtselement (77) auf dem Außenumfang des Nehmerelements (23) angeordnet ist,
das Steuerelement (75) auf dem Innenumfang des Nehmerelements (23) angeordnet ist; und
das Verbindungselement (78) durch das Nehmerelement (23) geführt wird und das Gewichtselement (77) mit dem Steuerelement (75) verbindet.

15. Naben-Innenschaltung (10) für ein Fahrrad gemäß Anspruch 14, wobei
das Antriebselement (22) eine erste Antriebskomponente (40) aufweist, welche mit der Antriebseinrichtung verbunden ist, und eine zweite Antriebskomponente (41), welche mit der ersten Antriebskomponente (40) in Richtung der Nabenachse (21) ausgerichtet ist und drehfest mit der ersten Antriebskomponente verbunden ist; und
das NeHmerelement (23) auf dem Außenumfang der zweiten Antriebskomponente (41) angeordnet ist.

16. Naben-Innenschaltung (10) für ein Fahrrad gemäß Anspruch 15, wobei
der Kraftübertragungsmechanismus (61) zwischen der Nabenachse (21) und dem Innenumfang der zweiten Antriebskomponente (41) angeordnet ist.

17. Naben-Innenschaltung (10) für ein Fahrrad gemäß Anspruch 16, wobei
der Kraftübertragungsmechanismus (61) ein Planetengetriebe (24) ist und folgendes aufweist: ein auf der Innenumfangsfläche der zweiten Antriebskomponente (41) ausgebildetes Innenzahnrad (51), ein Sonnenrad (50), welches auf der Außenumfangsfläche der Nabenachse (21) vorgesehen ist, so dass es mit dem Innenzahnrad (51) kämmt, eine Vielzahl von Planetenrädern (53), welche mit dem Innenzahnrad (51) und dem Sonnenrad (50) kämmen, sowie einen Rahmen (52), welcher um die Nabenachse (21) drehbar ist, auf welchem die Planetenräder (53) drehbar gelagert sind und welcher mit dem Nehmerelement (23) verbunden werden kann.

Figure 1

Figure 2

Figure 3

Figure 4

( a )

Zp2 — Zr(5I)
(53b)
Zp1(53a)

Zc(50)

( b )

Zr(5I)

22
Zp1(53a)

Zp2
(53b) Zs(50)

Figure 5

Figure 6

Figure 7

Figure 8

Figure 9

Figure 10

(a)

(b)

Figure 12

Figure 13

Figure 14

(a)

(b)

Figure 15

Figure 16

Figure 17

Figure 18

Figure 19

Figure 20

(a)

(b)

Figure 21

(a)

(b)